(19) Europäisches Patentamt
European Patent Office
Office européen des brevets

(11) EP 4 461 537 A1

(12) **EUROPÄISCHE PATENTANMELDUNG**

(43) Veröffentlichungstag:
**13.11.2024 Patentblatt 2024/46**

(21) Anmeldenummer: **24174279.0**

(22) Anmeldetag: **06.05.2024**

(51) Internationale Patentklassifikation (IPC):
***B33Y 70/00*** *(2020.01)* ***A61C 7/08*** *(2006.01)*
***C08F 222/10*** *(2006.01)* ***B33Y 80/00*** *(2015.01)*

(52) Gemeinsame Patentklassifikation (CPC):
(C-Sets verfügbar)
**A61C 7/08; B33Y 70/00; B33Y 80/00;**
**C08F 222/1065** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **08.05.2023 DE 102023111897**

(71) Anmelder: **VOCO GmbH**
**27472 Cuxhaven (DE)**

(72) Erfinder:
- **Lamping, Sebastian**
  **48153 Münster (DE)**
- **Nordmann, Markus**
  **27472 Cuxhaven (DE)**
- **Oldenburger, Daniel**
  **27476 Cuxhaven (DE)**
- **Maletz, Reinhard**
  **27472 Cuxhaven (DE)**
- **Plaumann, Manfred Thomas**
  **27472 Cuxhaven (DE)**

(54) **SCHIENE AUS UNTERSCHIEDLICH ELASTISCHEN MATERIALIEN**

(57) Die vorliegende Erfindung betrifft eine dentale, duroplastische Schienenanordnung umfassend eine erste, äußere Schiene mit höherem Elastizitätsmodul und eine zweite, innere Schiene mit einem niedrigeren Elastiziätsmodul sowie Verfahren zur Herstellung einer solchen dentalen, duroplastischen Schienenanordnung. Solche duroplastischen Schienenanordnungen zeichnen sich durch einen hohen Tragekomfort bei gleichzeitig hoher Genauigkeit und guter Formstabilität aus.

EP 4 461 537 A1

(52) Gemeinsame Patentklassifikation (CPC): (Forts.)

C-Sets
C08F 222/1065, C08F 220/1811, C08F 222/102;
C08F 222/1065, C08F 222/102, C08F 220/1811;
C08F 222/1065, C08F 222/102, C08F 220/20

## Beschreibung

Die vorliegende Erfindung betrifft eine dentale, duroplastische Schienenanordnung umfassend eine erste, äußere Schiene mit höherem Elastizitäsmodul und eine zweite, innere Schiene mit einem niedrigeren Elastiziätsmodul sowie Verfahren zur Herstellung einer solchen dentalen, duroplastischen Schienenanordnung.

Die Erfindung wird in den beigefügten Patentansprüchen definiert. Bevorzugte Aspekte der vorliegenden Erfindung ergeben sich überdies aus der nachfolgenden Beschreibung einschließlich der Beispiele.

Soweit für einen erfindungsgemäßen Aspekt (Zusammensetzung, Verfahren oder Verwendung) bestimmte Ausgestaltungen als bevorzugt bezeichnet werden, gelten die entsprechenden Ausführungen jeweils auch für die anderen Aspekte der vorliegenden Erfindung, *mutatis mutandis*. Bevorzugte individuelle Merkmale erfindungsgemäßer Aspekte (wie in den Ansprüchen definiert und/oder in der Beschreibung offenbart) sind miteinander kombinierbar und werden vorzugsweise miteinander kombiniert, sofern sich im Einzelfall für den Fachmann aus dem vorliegenden Text nichts anderes ergibt.

Dentale Schienen dienen als Schutzfunktion der Zähne bei Fehlbelastungen sowie zur Reduzierung der Beschwerden die durch ein nicht korrektes Zusammenspiel zwischen den Kiefergelenken und der Kaumuskulatur zu Stande kommen können. Neue Bewegungsmuster können eingestellt werden wodurch die Zahnsubstanzen geschützt und Kiefergelenksbeschwerden reduziert werden.

Dentale Schienen an sich sind seit langem bekannt. So werden z.B. thermoplastische Schienen durch Tiefziehverfahren hergestellt. Solche Schienen sind z.B. in US 3,768,164, US 4,798,534, US 5,692,894 und US 2005/0100853 A1 beschrieben.

Auch thermoplastische zweischichtige Schienen sind bekannt. So können sie aus zweischichtigen Tiefziehfolien hergestellt werden. Diese zweischichtigen Schienen bieten den Vorteil, dass die äußere, härtere Schicht für eine ausreichende Formstabilität sorgt, während die innere, weichere Schicht einem höheren Tragekomfort dient.

Solche Schienen sind z.B. in WO 2022/090940 A1, US 5,103,838, US 2001/0051256 A1, US 2009/0298006 A1, US 2013/0302742 A1, US 2016/0228215 A1, US 2020/0237478 A1, US 2020/0237480 A1, US 2020/0290262 A1, US 2021/0077225 A1, US 20210137642 A1, US 2021/0137643 A1 und EP 3 536 276 A1 beschrieben.

Nachteilig an diesen thermoplastischen Schienen ist, dass durch das Tiefziehen nur eine begrenzte Genauigkeit der Schiene erreicht werden kann.

Mit dem fortschreitenden Einzug der digitalen Zahnheilkunde werden vermehrt auch duroplastische Schienen in generativen Fertigungsverfahren wie 3D-Druck, Stereolithographie oder DLP-Verfahren hergestellt. Diese Verfahren führen zu einer deutlich höheren Genauigkeit bei der Herstellung als konventionelle Tiefziehverfahren.

Beispiele für solche Schienen sind z.B. in US 2020/0199268 A1, US 2020/0199346 A1 und US 2022/0041777 A1 beschrieben.

Nachteilig an diesen Schienen ist, dass sie einteilig hergestellt werden und sich die Vorteile von zweischichtigen, thermoplatischen Tiefziehschienen nicht übertragen lassen.

Es besteht also ein offenkundiger Bedarf an dentalen Schienen, die die Vorteile zweischichtiger thermoplastischer Schienen mit der Genauigkeit generativ hergestellter duroplastischer Schienen vereinen.

Ein der vorliegenden Erfindung zugrundeliegendes Ziel ist es, eine dentale Schienenanordnung bereitzustellen, die durch eine härtere, äußere Schicht und eine weichere, innere Schicht gleichzeitig Formstabilität und Tragekomfort bietet und dabei in einer höchstmöglichen Genauigkeit hergestellt werden kann.

Erfindungsgemäß wird nach einem ersten Aspekt eine dentale, duroplastische Schienenanordnung vorgeschlagen, wie sie in Anspruch 1 definiert ist, nämlich eine dentale, duroplastische Schienenanordnung umfassend

a) eine erste duroplastische Schiene (S-A) und

b) eine zweite duroplastische Schiene (S-B)

wobei die erste Schiene (S-A) eine Innenseite (S-A-IS) und eine Außenseite (S-A-AS) aufweist und wobei die zweite Schiene (S-B) eine Innenseite (S-B-IS) und eine Außenseite (S-B-AS) aufweist und wobei die Form der Innenseite (S-A-IS) der ersten Schiene der Form der Außenseite (S-B-AS) der zweiten Schiene entspricht,
dadurch gekennzeichnet, dass die erste Schiene (S-A) einen höheren Elastizitätsmodul aufweist als die zweite Schiene (S-B).

In einer weiteren bevorzugten Ausführungsform umfasst die dentale, duroplastische Schienenanordnung zusätzlich

c) eine Klebstoffzusammensetzung (Z-C)

wobei die Innenseite (S-A-IS) der ersten Schiene (S-A) und die Außenseite (S-B-AS) der zweiten Schiene (S-B) durch die Klebstoffzusammensetzung (Z-C) verklebt sind.

Um eine gute Formstabilität auf der einen Seite und einen hohen Tragekomfort auf der anderen Seite zu gewährleisten, liegt in einer bevorzugten Ausführungsform

der Elastizitätsmodul der ersten Schiene im Bereich von 500 MPa bis 2500 MPa, bevorzugt im Bereich von 1000 MPa bis 2500 MPa, besonders bevorzugt im Bereich von 1000 MPa bis 2000 MPa,
und/oder (vorzugsweise "und")

der Elastizitätsmodul der zweiten Schiene im Bereich von 2 MPa bis 1200 MPa, bevorzugt im Bereich von 5 MPa bis 500 MPa, besonders bevorzugt im Bereich von 5 MPa bis 250 MPa.

Solche erfindungsgemäßen dentalen, duroplastischen Schienenanordnungen lassen sich durch Polymerisation einer ersten Zusammensetzung (Z-A) und einer zweiten Zusammensetzung (Z-B) herstellen. Vorzugsweise sind sowohl die erste Zusammensetzung (Z-A) als auch die zweite Zusammensetzung (Z-B) (Meth)acrylat-Zusammensetzungen. Dabei wird im Rahmen der vorliegenden Anmeldung unter "(meth)acryl" sowohl "methacryl" als auch "acryl" verstanden.

Vorzugsweise erfolgt die Herstellung einer dentalen, duroplastischen Schienenanordnungen in einem generativen Fertigungsverfahren, bevorzugt durch ein in der ISO/ASTM 52900:2015 unter "VAT Photopolymerization" beschriebenem Verfahren, besonders bevorzugt durch Stereolithographie (SLA) oder Digital Light Processing (DLP). Dabei werden die erste Schiene (S-A) und die zweite Schiene (S-B) getrennt voneinander durch schichtweise Polymerisation einer ersten Zusammensetzung (Z-A) und einer zweiten Zusammensetzung (Z-B) hergestellt und anschließend miteinander verklebt.

Bevorzugt ist daher eine erfindungsgemäße dentale, duroplastische Schienenanordnung, wobei
die erste Schiene (S-A) durch Polymerisation einer ersten Zusammensetzung (Z-A) umfassend

Z-A-1) ein, zwei oder mehrere multifunktionelle Urethan(meth)acrylate,
Z-A-2) ein, zwei oder mehrere monofunktionelle (Meth)acrylate,
Z-A-3) ein, zwei oder mehrere multifunktionelle (Meth)acrylate ohne Urethangruppen,
Z-A-4) einen Photoinitiator oder ein Photoinitiatorsystem,
Z-A-5) ein, zwei oder mehrere Inhibitoren,
Z-A-6) optional Farbmittel und
Z-A-7) optional UV-Absorber

erhalten wird,
und/oder (vorzugsweise "und")
die zweite Schiene (S-B) durch Polymerisation einer zweiten Zusammensetzung (Z-B) umfassend

Z-B-1) ein, zwei oder mehrere multifunktionelle Urethan(meth)acrylate,
Z-B-2) ein, zwei oder mehrere monofunktionelle (Meth)acrylate,
Z-B-3) ein, zwei oder mehrere multifunktionelle (Meth)acrylate ohne Urethangruppen,
Z-B-4) einen Photoinitiator oder ein Photoinitiatorsystem,
Z-B-5) ein, zwei oder mehrere Inhibitoren,
Z-B-6) optional Farbmittel und
Z-B-7) optional UV-Absorber

erhalten wird.

In einer bevorzugten Ausführungsform handelt es sich um eine erfindungsgemäße dentale, duroplastische Schienenanordnung, wobei
die erste Schiene (S-A) durch Polymerisation einer ersten Zusammensetzung (Z-A) umfassend

Z-A-1) in einer Menge von 25 bis 75 Gew.-%, bevorzugt von 40 bis 70 Gew.-%,
Z-A-2) in einer Menge von 1 bis 20 Gew.-%, bevorzugt von 2 bis 15 Gew.-%,
Z-A-3) in einer Menge von 20 bis 60 Gew.-%, bevorzugt von 25 bis 50 Gew.-%,
Z-A-4) in einer Menge von 0,1 bis 5 Gew.-%, bevorzugt von 0,5 bis 3 Gew.-%,

(fortgesetzt)

Z-A-5) in einer Menge von 0,01 bis 1 Gew.-%, bevorzugt von 0,01 bis 0,1 Gew.-%,
Z-A-6) in einer Menge von 0 bis 1 Gew.-%, bevorzugt von 0,0001 bis 0,5 Gew.-%, und
Z-A-7) in einer Menge von 0 bis 1 Gew.-%, bevorzugt von 0,01 bis 0,5 Gew.-%,

jeweils bezogen auf die Gesamtmasse der Zusammensetzung Z-A, erhalten wird,
und/oder (vorzugsweise "und")
die zweite Schiene (S-B) durch Polymerisation einer zweiten Zusammensetzung (Z-B) umfassend

Z-B-1) in einer Menge von 25 bis 75 Gew.-%, bevorzugt von 40 bis 70 Gew.-%,
Z-B-2) in einer Menge von 20 bis 60 Gew.-%, bevorzugt von 25 bis 50 Gew.-%,
Z-B-3) in einer Menge von 1 bis 20 Gew.-%, bevorzugt von 2 bis 15 Gew.-%,
Z-B-4) in einer Menge von 0,1 bis 5 Gew.-%, bevorzugt von 0,5 bis 3 Gew.-%,
Z-B-5) in einer Menge von 0,01 bis 1 Gew.-%, bevorzugt von 0,01 bis 0,1 Gew.-%,
Z-B-6) in einer Menge von 0 bis 1 Gew.-%, bevorzugt von 0,0001 bis 0,5 Gew.-%, und
Z-B-7) in einer Menge von 0 bis 1 Gew.-%, bevorzugt von 0,01 bis 0,5 Gew.-%,

jeweils bezogen auf die Gesamtmasse der Zusammensetzung Z-B, erhalten wird.

Bevorzugt ist eine erfindungsgemäße Dentale, duroplastische Schienenanordnung, wobei

die Komponente Z-A-1 difunktionelles Urethan(meth)acrylat mit einem Molekulargewicht (MW) im Bereich von 400 bis 550 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und multifunktionelles, oligomeres Urethan(meth)acrylat mit einem Molekulargewicht (MW) > 650 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-A-1, umfasst
und/oder (vorzugsweise "und")

die Komponente Z-A-2 ausgewählt ist aus der Gruppe bestehend aus 2-Hydroxyethyl(meth)acrylat, 2-Hydroxypropyl(meth)acrylat, 3-Hydroxypropyl(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)methyl(meth)acrylat, Benzyl-(meth)acrylat, 2-Phenoxyethyl(meth)acrylat, 2-Ethoxyethyl(meth)acrylat, 2-(2-Ethoxy-ethoxy)ethyl(meth)acrylat, 2-[2-(2-Ethoxyethoxy)ethoxy]ethyl(meth)acrylat, 2-Methoxyethyl(meth)acrylat, 2-(2-Methoxyethoxy)ethyl(meth)acrylat, 2-[2-(2-Methoxyethoxy)-ethoxy]ethyl(meth)acrylat, Hexyl(meth)acrylat, 2-Ethylhexyl(meth)acrylat, Decyl(meth)-acrylat, Isodecyl(meth)acrylat, Dodecyl(meth)acrylat, 2-[[(Butylamino)carbonyl]oxy]-ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat,
und/oder (vorzugsweise "und")

die Komponente Z-A-3 ausgewählt ist aus der Gruppe bestehend aus Ethylenglycol-di(meth)acrylat, Diethylenglycoldi(meth)acrylat, Triethylenglycoldi(meth)acrylat, Tetra-ethylenglycoldi(meth)acrylat, Polyethylenglycoldi(meth)acrylat, Propylenglycoldi(meth)-acrylat, Dipropylenglycoldi(meth)acrylat, Tripropylenglycoldi(meth)acrylat, Tetrapropy-lenglycoldi(meth)acrylat, Polypropylenglycoldi(meth)acrylat, 1,4-Butandioldi(meth)acrylat, 1,3-Butandioldi(meth)acrylat, 1,6-Hexandioldi(meth)acrylat, 1,10-Decandioldi(meth)-acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropant-ri(meth)acrylat, Pentaerythritoldi(meth)acrylat, Pentaerythritoltri(meth)acrylat, Pentaeryth-ritoltetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxyphenyl]-propan, 2,2-Bis[4-(meth)acryloyloxydiethoxyphenyl]propan, 2,2-Bis[4-(meth)acryloyloxy-triethoxyphenyl]propan 2,2-Bis[4-(meth)acryloyloxytetraethoxyphenyl]propan, 2,2-Bis[4-(meth)acryloyloxypentaethoxyphenyl]-propan, 2,2-Bis[4-(meth)acryloyloxydipropoxy-phenyl]propan, 2,2-Bis[4-(meth)acryloyloxyethoxyphenyl]-2-[4-(meth)acryloyloxydiethoxy-phenyl]propan, 2-[4-(Meth)acryloyloxydiethoxyphenyl]-2-[4-(meth)-acryloyloxytriethoxy-phenyl]propan, 2-[4-(Meth)acryloyloxydipropoxyphenyl]-2-[4-(meth)acryloyloxytriethoxy-phenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.0$^{2,6}$]decan,
und/oder (vorzugsweise "und")

die Komponente Z-A-4 ausgewählt ist aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)phosphinate (CAS 84434-11-7) und (Poly(oxy-1,2-ethanediyl),α,α',α"-1,2,3-propanetriyltris[w-[[phenyl(2,4,6-trimethylbenzoyl)phosphinyl]oxy]-Polymer) (CAS 1834525-17-5),
und/oder (vorzugsweise "und")

die Komponente Z-A-5 ausgewählt ist aus der Gruppe bestehend aus Hydrochinon, Hydrochinonmonomethylether, 2,6-Di-*tert*.-butyl-4-methylphenol, *tert*.-Butylhydroxyanisol und 2,2,6,6-Tetramethyl-piperidin-1-oxyl,
und/oder (vorzugsweise "und")

die Komponente Z-B-1 multifunktionelles, oligomeres Urethan(meth)acrylat mit einem Molekulargewicht (MW) > 650 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%,und difunktionelles Urethan(meth)acrylat mit einem Molekulargewicht (MW) im Bereich von 400 bis 550 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-% jeweils bezogen auf die Gesamtmasse von Z-B-1, umfasst
und/oder (vorzugsweise "und")

die Komponente Z-B-2 ausgewählt ist aus der Gruppe bestehend aus 2-Hydroxyethyl(meth)acrylat, 2-Hydroxypropyl(meth)acrylat, 3-Hydroxypropyl(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)methyl(meth)acrylat, Benzyl-(meth)acrylat, 2-Phenoxyethyl(meth)acrylat, 2-Ethoxyethyl(meth)acrylat, 2-(2-Ethoxy-ethoxy)ethyl(meth)acrylat, 2-[2-(2-Ethoxyethoxy)ethoxy]ethyl(meth)acrylat, 2-Methoxyethyl(meth)acrylat, 2-(2-Methoxyethoxy)ethyl(meth)acrylat, 2-[2-(2-Methoxyethoxy)-ethoxy]ethyl(meth)acrylat, Hexyl(meth)acrylat, 2-Ethylhexyl(meth)acrylat, Decyl(meth)acrylat, Isodecyl(meth)acrylat, Dodecyl(meth)acrylat, 2-[[(Butylamino)carbonyl]-oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat,
und/oder (vorzugsweise "und")

die Komponente Z-B-3 ausgewählt ist aus der Gruppe bestehend aus Ethylenglycol-di(meth)acrylat, Diethylenglycoldi(meth)acrylat, Triethylenglycoldi(meth)acrylat, Tetra-ethylenglycoldi(meth)acrylat, Polyethylenglycoldi(meth)acrylat, Propylenglycoldi(meth)-acrylat, Dipropylenglycoldi(meth)acrylat, Tripropylenglycoldi(meth)acrylat, Tetrapropy-lenglycoldi(meth)acrylat, Polypropylenglycoldi(meth)acrylat, 1,4-Butandioldi(meth)acrylat, 1,3-Butandioldi(meth)acrylat, 1,6-Hexandioldi(meth)acrylat, 1,10-Decandioldi(meth)-acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropant-ri(meth)acrylat, Pentaerythritoldi(meth)acrylat, Pentaerythritoltri(meth)acrylat, Pentaeryth-ritoltetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxyphenyl]-propan, 2,2-Bis[4-(meth)acryloyloxydiethoxyphenyl]propan, 2,2-Bis[4-(meth)acryloyloxy-triethoxyphenyl]propan 2,2-Bis[4-(meth)acryloyloxytetraethoxyphenyl]propan, 2,2-Bis[4-(meth)acryloyloxypentaethoxyphenyl]-propan, 2,2-Bis[4-(meth)acryloyloxydipropoxy-phenyl]propan, 2,2-Bis[4-(meth)acryloyloxyethoxyphenyl]-2-[4-(meth)acryloyloxydiethoxy-phenyl]propan, 2-[4-(Meth)acryloyloxydiethoxyphenyl]-2-[4-(meth)-acryloyloxytriethoxy-phenyl]propan, 2-[4-(Meth)acryloyloxydipropoxyphenyl]-2-[4-(meth)acryloyloxytriethoxy-phenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.0$^{2,6}$]decan,
und/oder (vorzugsweise "und")

die Komponente Z-B-4 ausgewählt ist aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)phosphinate (CAS 84434-11-7) und (Poly(oxy-1,2-ethanediyl),α,α',α"-1,2,3-propanetriyltris[w-[[phenyl(2,4,6-trimethylbenzoyl)phosphinyl]oxy]-Polymer) (CAS 1834525-17-5),
und/oder (vorzugsweise "und")

die Komponente Z-B-5 ausgewählt ist aus der Gruppe bestehend aus Hydrochinon, Hydrochinonmonomethylether, 2,6-Di-*tert*.-butyl-4-methylphenol, *tert*.-Butylhydroxyanisol und 2,2,6,6-Tetramethyl-piperidin-1-oxyl.

In einer bevorzugten Ausführungsform umfasst die Komponente Z-A-1 ein Urethan(meth)acrylat ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexadecan-1,16-dioxydi(meth)acrylat, 1,5,5-Trimethyl-1-[(2-(meth)acryloyloxy-ethyl)carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenylenimino-carbonyloxy-2,1-ethandiyl)]bis(meth)acrylat (CAS 51243-61-9 Methacrylat; CAS 69790-08-5 Acrylat), 1,1'-[Methylenbis(2,1-phenyleniminocarbonyloxy-2,1-ethandiyl)]bis(meth)-acrylat,
und/oder

umfasst die Komponente Z-B-1 ein Urethan(meth)acrylat ausgewählt aus der Gruppe bestehend aus $H_2C=C(R^1)-C(=O)-O-R^2-O-C(=O)-NH-R^3-NH-C(=O)-[O-R^4-O-C(=O)-NH-R^3-NH-C(=O)-]_nO-R^2-O-C(=O)-C(CR^1)=CH_2$ und $[H_2C=C(R^1)C(=O)-O-R^2-O-C(=O)-NH-R^3-NH-C(=O)-O-]_mR^5$, wobei
$R^1$ ein Wasserstoffatom oder eine Methylgruppe ist,
$R^2$ eine geradkettige oder verzweigte C2- bis C4-Alkylengruppe ist,
$R^3$ eine geradkettige, verzweigte und/oder cyclische C2- bis C15-Alkylen-, Arylen-, Arylalkylen- oder Alkylarylengruppe ist,
$R^4$ eine divalente organische Linkergruppe ist,
$R^5$ eine m-valente organische Linkergruppe ist,
n eine ganze Zahl von 0 bis 6 ist und
m eine ganze Zahl von 3 bis 6 ist.

In einer bevorzugten Ausführungsform ist $R^2$ ausgewählt aus der Gruppe bestehend aus

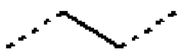 , 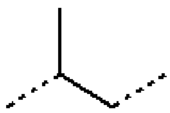 , 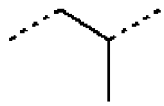 , 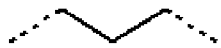

und

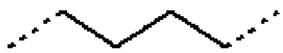 ,

wobei $R^2$ jeweils mit der linken gestrichelten Linie an Sauerstoffatom der (Meth)acrylatgruppe und mit der rechten gestrichelten Linie an das Sauerstoffatom der Urethangruppe gebunden ist.

In einer bevorzugten Ausführungsform ist $R^3$ ausgewählt aus der Gruppe bestehend aus

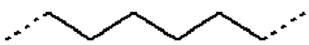 , 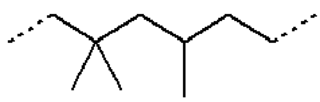 , 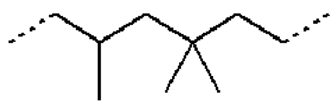 ,

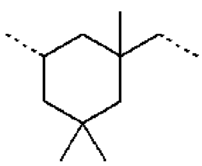 , 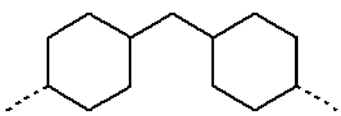 , 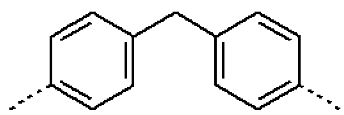 ,

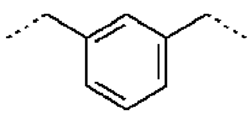 und 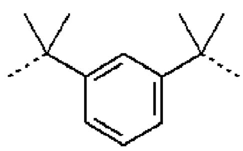 ,

wobei $R^3$ jeweils mit einer gestrichelten Linie an ein Stickstoffatom der Urethangruppe gebunden ist.

In einer besonders bevorzugten Ausführungsform ist $R^3$ ausgewählt aus der Gruppe bestehend aus

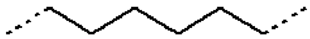 , 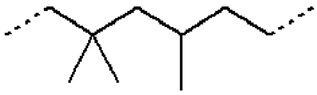 , 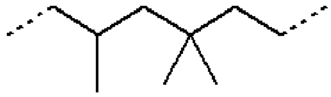

und

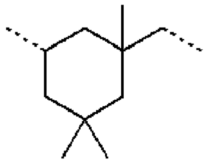 .

In einer bevorzugten Ausführungsform ist $R^4$ ein von einem Diol abgeleiteter Rest, wobei das Diol ausgewählt ist aus der Gruppe bestehend aus Ethylenglycol, Diethylenglycol, Triethylenglycol, Tetraethylenglycol, Polyethylenglycol, Propylenglycol, Dipropylenglycol, Tripropylenglycol, Tetrapropylenglycol, Polypropylenglycol, 1,3-Butandiol, 1,4-Butandiol, Poly-(1,4-butylenglycol), Neopentylglycol, 1,6-Hexandiol, 1,4-Cyclohexandiol, 1,10-Decandiol, 1,12-Dodecandiol, $H[O-(CH_2)_5-C(=O)]_aO-CH_2CH_2-O[C(=O)-(CH_2)_5-O]_bH$ mit a = 1 bis 10 und b = 1 bis 10, $H[O-(CH_2)_5-C(=O)]_cO-CH_2CH_2-O-CH_2CH_2-O[C(=O)-(CH_2)_5-O]_dH$ mit c = 1 bis 10 und d = 1 bis 10 und $HO-CH_2CH_2O-[C=(O)-(CH_2)_4-C(=O)-OCH_2CH_2O]_e-H$ mit e = 1 bis 10.

In einer bevorzugten Ausführungsform ist $R^5$ ein von einem Polyol abgeleiteter Rest, wobei das Polyol ausgewählt ist aus der Gruppe bestehend Glycerol, Trimethylolpropan, Ditrimethylolpropan, Pentaerythritol und Dipentaerythritol.

Erste duroplastische Schiene (S-A)

Die erste duroplastische Schiene (S-A) weist vorzugsweise einen Elastizitätsmodul im Bereich von 500 MPa bis 2500 MPa, bevorzugt im Bereich von 1000 MPa bis 2500 MPa, besonders bevorzugt im Bereich von 1000 MPa bis 2000 MPa auf.

Die erste duroplastische Schiene (S-A) wird durch Polymerisation einer ersten Zusammensetzung (Z-A) umfassend

- Z-A-1) ein, zwei oder mehrere multifunktionelle Urethan(meth)acrylate,
- Z-A-2) ein, zwei oder mehrere monofunktionelle (Meth)acrylate,
- Z-A-3) ein, zwei oder mehrere multifunktionelle (Meth)acrylate ohne Urethangruppen,
- Z-A-4) einen Photoinitiator oder ein Photoinitiatorsystem,
- Z-A-5) ein, zwei oder mehrere Inhibitoren,
- Z-A-6) optional Farbmittel und
- Z-A-7) optional UV-Absorber

erhalten.

Vorzugsweise wird die erste Schiene (S-A) durch Polymerisation einer ersten Zusammensetzung (Z-A) umfassend

- Z-A-1) in einer Menge von 25 bis 75 Gew.-%, bevorzugt von 40 bis 70 Gew.-%,
- Z-A-2) in einer Menge von 1 bis 20 Gew.-%, bevorzugt von 2 bis 15 Gew.-%,
- Z-A-3) in einer Menge von 20 bis 60 Gew.-%, bevorzugt von 25 bis 50 Gew.-%,
- Z-A-4) in einer Menge von 0,1 bis 5 Gew.-%, bevorzugt von 0,5 bis 3 Gew.-%,
- Z-A-5) in einer Menge von 0,01 bis 1 Gew.-%, bevorzugt von 0,01 bis 0,1 Gew.-%,
- Z-A-6) in einer Menge von 0 bis 1 Gew.-%, bevorzugt von 0,0001 bis 0,5 Gew.-%, und
- Z-A-7) in einer Menge von 0 bis 1 Gew.-%, bevorzugt von 0,01 bis 0,5 Gew.-%,

jeweils bezogen auf die Gesamtmasse der Zusammensetzung Z-A, erhalten.

Die Komponente Z-A-1 liegt in einer Menge von 25 bis 75 Gew.-%, bevorzugt von 40 bis 70 Gew.-%, bezogen auf die Gesamtmasse der Zusammensetzung Z-A vor. Vorzugsweise umfasst die Komponente Z-A-1 difunktionelles Urethan(meth)acrylat mit einem Molekulargewicht (MW) im Bereich von 400 bis 550 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und multifunktionelles, oligomeres Urethan(meth)acrylat mit einem Molekulargewischt (MW) > 650 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-A-1.

Das difunktionelle Urethan(meth)acrylat mit einem Molekulargewicht (MW) im Bereich von 400 bis 550 g/mol umfasst dabei vorzugsweise ein Urethan(meth)acrylat ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexadecan-1,16-dioxydi(meth)acrylat, 1,5,5-Trimethyl-1-[(2-(meth)acryloyloxyethyl)carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenyleniminocarbonyloxy-2,1-ethandiyl)]bis(meth)-acrylat (CAS 51243-61-9 Methacrylat; CAS 69790-08-5 Acrylat), 1,1'-[Methylenbis(2,1-phenyleniminocarbonyloxy-2,1-ethandiyl)]bis(meth)acrylat.

Das multifunktionelle, oligomere Urethan(meth)acrylat mit einem Molekulargewischt (MW) > 650 g/mol umfasst dabei vorzugsweise ein Urethan-Monomer ausgewählt aus der Gruppe bestehend aus $H_2C{=}C(R^1){-}C({=}O){-}O{-}R^2{-}O{-}C({=}O){-}NH{-}R^3{-}NH{-}C({=}O){-}[O{-}R^4{-}O{-}C({=}O){-}NH{-}R^3{-}NH{-}C({=}O){-}]_nO{-}R^2{-}O{-}C({=}O){-}C(CR^1){=}CH_2$ und

$[H_2C{=}C(R^1)C({=}O){-}O{-}R^2{-}O{-}C({=}O){-}NH{-}R^3{-}NH{-}C({=}O){-}O{-}]_mR^5$, wobei
$R^1$ ein Wasserstoffatom oder eine Methylgruppe ist,
$R^2$ eine geradkettige oder verzweigte C2- bis C4-Alkylengruppe ist,
$R^3$ eine geradkettige, verzweigte und/oder cyclische C2- bis C15-Alkylen-, Arylen-, Arylalkylen- oder Alkylarylengruppe ist,
$R^4$ eine divalente organische Linkergruppe ist,
$R^5$ eine m-valente organische Linkergruppe ist,
n eine ganze Zahl von 0 bis 6 ist und
m eine ganze Zahl von 3 bis 6 ist.

In einer bevorzugten Ausführungsform ist $R^2$ ausgewählt aus der Gruppe bestehend aus

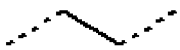
,
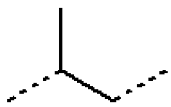
,
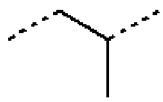
,
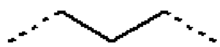

und

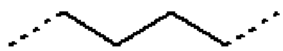
,

wobei $R^2$ jeweils mit der linken gestrichelten Linie an Sauerstoffatom der (Meth)acrylatgruppe und mit der rechten gestrichelten Linie an das Sauerstoffatom der Urethangruppe gebunden ist.

In einer bevorzugten Ausführungsform ist $R^3$ ausgewählt aus der Gruppe bestehend aus

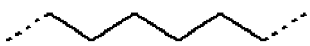
,
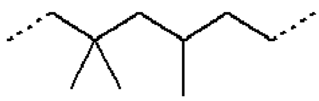
,
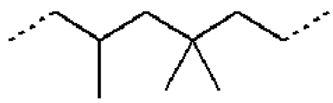
,

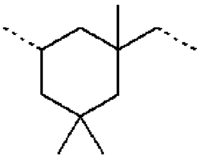 , 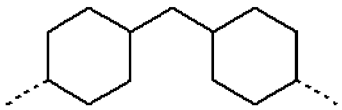 , 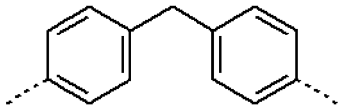 ,

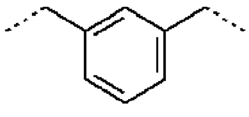 und 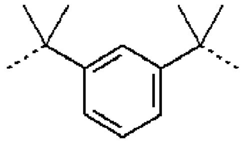 ,

wobei $R^3$ jeweils mit einer gestrichelten Linie an ein Stickstoffatom der Urethangruppe gebunden ist.

In einer besonders bevorzugten Ausführungsform ist $R^3$ ausgewählt aus der Gruppe bestehend aus

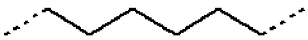 , 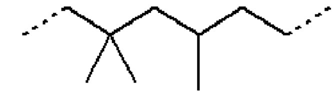 , 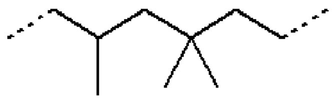

und

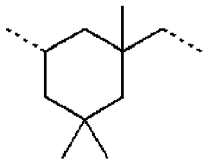 .

In einer bevorzugten Ausführungsform ist $R^4$ ein von einem Diol abgeleiteter Rest, wobei das Diol ausgewählt ist aus der Gruppe bestehend aus Ethylenglycol, Diethylenglycol, Triethylenglycol, Tetraethylenglycol, Polyethylenglycol, Propylenglycol, Dipropylenglycol, Tripropylenglycol, Tetrapropylenglycol, Polypropylenglycol, 1,3-Butandiol, 1,4-Butandiol, Poly-(1,4-butylenglycol), Neopentylglycol, 1,6-Hexandiol, 1,4-Cyclohexandiol, 1,10-Decandiol, 1,12-Dodecandiol, $H[O-(CH_2)_5-C(=O)]_aO-CH_2CH_2-O[C(=O)-(CH_2)_5-O]_bH$ mit a = 1 bis 10 und b = 1 bis 10, $H[O-(CH_2)_5-C(=O)]_cO-CH_2CH_2-O-CH_2CH_2-O[C(=O)-(CH_2)_5-O]_dH$ mit c = 1 bis 10 und d = 1 bis 10 und $HO-CH_2CH_2O-[C=(O)-(CH_2)_4-C(=O)-OCH_2CH_2O]_e-H$ mit e = 1 bis 10.

In einer bevorzugten Ausführungsform ist $R^5$ ein von einem Polyol abgeleiteter Rest, wobei das Polyol ausgewählt ist aus der Gruppe bestehend Glycerol, Trimethylolpropan, Ditrimethylolpropan, Pentaerythritol und Dipentaerythritol.

Die Komponente Z-A-2 liegt in einer Menge von 1 bis 20 Gew.-%, bevorzugt von 2 bis 15 Gew.-%, bezogen auf die Gesamtmasse der Zusammensetzung Z-A vor. Vorzugsweise ist die Komponente Z-A-2 ausgewählt aus der Gruppe bestehend aus 2-Hydroxyethyl(meth)acrylat, 2-Hydroxypropyl(meth)acrylat, 3-Hydroxypropyl(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)methyl(meth)acrylat, Benzyl-(meth)acrylat, 2-Phenoxyethyl(meth)acrylat, 2-Ethoxyethyl(meth)acrylat, 2-(2-Ethoxy-ethoxy)ethyl(meth)acrylat, 2-[2-(2-Ethoxyethoxy)ethoxy]ethyl(meth)acrylat, 2-Methoxyethyl(meth)acrylat, 2-(2-Methoxyethoxy)ethyl(meth)acrylat, 2-[2-(2-Methoxyethoxy)-ethoxy]ethyl(meth)acrylat, Hexyl(meth)acrylat, 2-Ethylhexyl(meth)acrylat, Decyl(meth)acrylat, Isodecyl(meth)acrylat, Dodecyl(meth)acrylat, 2-[[(Butylamino)carbonyl]-oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat.

Die Komponente Z-A-3 liegt in einer Menge von 20 bis 60 Gew.-%, bevorzugt von 25 bis 50 Gew.-%, bezogen auf die Gesamtmasse der Zusammensetzung Z-A vor. Vorzugsweise ist die Komponente Z-A-3 ausgewählt aus der Gruppe bestehend aus Ethylenglycol-di(meth)acrylat, Diethylenglycoldi(meth)acrylat, Triethylenglycoldi(meth)acrylat, Tetra-ethylenglycoldi(meth)acrylat, Polyethylenglycoldi(meth)acrylat, Propylenglycoldi(meth)-acrylat, Dipropylenglycoldi(meth)acrylat, Tripropylenglycoldi(meth)acrylat, Tetrapropy-lenglycoldi(meth)acrylat, Polypropylenglycoldi(meth)acrylat, 1,4-Butandioldi(meth)acrylat, 1,3-Butandioldi(meth)acrylat, 1,6-Hexandioldi(meth)acrylat, 1,10-Decandioldi(meth)-acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropant-ri(meth)acrylat, Pentaerythritoldi(meth)acrylat, Pentaerythritoltri(meth)acrylat, Pentaeryth-ritoltetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxyphenyl]-propan, 2,2-Bis[4-(meth)acryloyloxydiethoxyphenyl]propan, 2,2-Bis[4-(meth)acryloyloxy-triethoxyphenyl]propan 2,2-Bis[4-(meth)acryloyloxytetraethoxyphenyl]propan, 2,2-Bis[4-(meth)acryloyloxypentaethoxyphenyl]-propan, 2,2-Bis[4-(meth)acryloyloxydipropoxy-phenyl]propan, 2,2-Bis[4-(meth)acryloyloxyethoxyphenyl]-2-[4-(meth)acryloyloxydiethoxy-phenyl]propan, 2-[4-(Meth)acryloyloxydiethoxyphenyl]-2-[4-(meth)-acryloyloxytriethoxy-phenyl]propan, 2-[4-(Meth)acryloyloxydipropoxyphenyl]-2-[4-(meth)acryloyloxytriethoxy-phenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.0$^{2,6}$]decan.

Die Komponente Z-A-4 liegt in einer Menge von 0,1 bis 5 Gew.-%, bevorzugt von 0,5 bis 3 Gew.-%, bezogen auf die Gesamtmasse der Zusammensetzung Z-A vor. Vorzugsweise ist die Komponente Z-A-4 ausgewählt aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)phosphinate (CAS 84434-11-7) und (Poly(oxy-1,2-ethanediyl),α,α',α"-1,2,3-propanetriyltris[w-[[phenyl(2,4,6-trimethylbenzoyl)phosphinyl]oxy]-Polymer) (CAS 1834525-17-5).

Die Komponente Z-A-5 liegt in einer Menge von 0,01 bis 1 Gew.-%, bevorzugt von 0,01 bis 0,1 Gew.-%, bezogen auf die Gesamtmasse der Zusammensetzung Z-A vor. Vorzugsweise ist die Komponente Z-A-5 ausgewählt aus der Gruppe bestehend aus Hydrochinon, Hydrochinonmonomethylether, 2,6-Di-*tert*.-butyl-4-methylphenol, *tert*.-Butylhydroxyanisol und 2,2,6,6-Tetramethyl-piperidin-1-oxyl.

Optional kann die Zusammensetzung Z-A auch Farbmittel (Z-A-6) enthalten. Die Komponente Z-A-6 liegt in einer Menge von 0 bis 1 Gew.-%, bevorzugt von 0,0001 bis 0,5 Gew.-%, bezogen auf die Gesamtmasse der Zusammensetzung Z-A vor. Vorzugsweise umfasst die Komponente Z-A-6 anorganische Farbpigmente, organische Farbpigmente oder organische Farbstoffe.

Optional kann die Zusammensetzung Z-A auch UV-Absorber (Z-A-7) enthalten. Die Komponente Z-A-7 liegt in einer Menge von 0 bis 1 Gew.-%, bevorzugt von 0,01 bis 0,5 Gew.-%, bezogen auf die Gesamtmasse der Zusammensetzung Z-A vor. Vorzugsweise ist die Komponente Z-A-7 ausgewählt aus der Gruppe bestehend aus 2,2'-Methylenbis[6-(2H-benzotriazol-2-yl)-4-(1,1,3,3-tetramethylbutyl)phenol] (CAS 103597-45-1), 2,2',4,4'-Tetrahydroxybenzophenon (CAS 131-55-5), 2-*tert*.-Butyl-6-(5-chloro-2H-benzotriazol-2-yl)-4-methylphenol (CAS 3896-11-5), 2,2'-Benzol-1,4-diylbis(4H-3,1-benzoxazin-4-on) (CAS 18600-59-4), 2-(4,6-Bis-(2,4-dimethylphenyl)-1,3,5-triazin-2-yl)-5-(octyloxy)-phenol (CAS 2725-22-6), 2-(2-Hydroxy-5-methylphenyl)benzotriazol (CAS 2440-22-4), 2-(2-Hydroxyphenyl)benzotriazol, 2-(2H-Benzotriazol-2-yl)-6-dodecyl-4-methylphenol (CAS 23328-53-2), 2-(2'-Hydroxy-3',5'-di-*tert*.-butylphenyl)-5-chlorobenzotriazol (CAS 3864-99-1), 2,2'-Dihydroxy-4-methoxybenzophenon (CAS 131-53-3), 2,2'-Dihydroxy-4,4'-dimethoxybenzophenon (CAS 131-54-4), Ethyl-2-cyano-3-(4-hydroxy-3-methoxyphenyl)prop-2-enoat (CAS 13373-29-0), Bis(1,2,2,6,6-pentamethyl-4-piperidyl)sebacat (CAS 41556-26-7), Methyl-1,2,2,6,6-pentamethyl-4-piperidylsebacat (CAS 82919-37-7), Bis(1-octyloxy-2,2,6,6-tetramethyl-4-piperidyl)sebacat (CAS 129757-67-1) und Bis-(1,2,2,6,6-pentamethyl-4-piperidyl)-[[3,5-bis(1,1-dimethylethyl)-4-hydroxyphenyl]methyl]-butylmalonat (CAS-Nr. 63843-89-0).

Zweite duroplastische Schiene (S-B)

Die zweite duroplastische Schiene (S-B) weist vorzugsweise einen Elastizitätsmodul im Bereich 2 MPa bis 1200 MPa, bevorzugt im Bereich von 5 MPa bis 500 MPa, besonders bevorzugt im Bereich von 5 MPa bis 250 MPa, auf.

Die zweite duroplastische Schiene (S-B) wird durch Polymerisation einer zweiten Zusammensetzung (Z-B) umfassend

- Z-B-1) ein, zwei oder mehrere multifunktionelle Urethan(meth)acrylate,
- Z-B-2) ein, zwei oder mehrere monofunktionelle (Meth)acrylate,
- Z-B-3) ein, zwei oder mehrere multifunktionelle (Meth)acrylate ohne Urethangruppen,
- Z-B-4) einen Photoinitiator oder ein Photoinitiatorsystem,
- Z-B-5) ein, zwei oder mehrere Inhibitoren,
- Z-B-6) optional Farbmittel und
- Z-B-7) optional UV-Absorber

erhalten.

Vorzugsweise wird die zweite Schiene (S-B) durch Polymerisation einer zweiten Zusammensetzung (Z-B) umfassend

- Z-B-1) in einer Menge von 25 bis 75 Gew.-%, bevorzugt von 40 bis 70 Gew.-%,
- Z-B-2) in einer Menge von 20 bis 60 Gew.-%, bevorzugt von 25 bis 50 Gew.-%,
- Z-B-3) in einer Menge von 1 bis 20 Gew.-%, bevorzugt von 2 bis 15 Gew.-%,
- Z-B-4) in einer Menge von 0,1 bis 5 Gew.-%, bevorzugt von 0,5 bis 3 Gew.-%,
- Z-B-5) in einer Menge von 0,01 bis 1 Gew.-%, bevorzugt von 0,01 bis 0,1 Gew.-%,
- Z-B-6) in einer Menge von 0 bis 1 Gew.-%, bevorzugt von 0,0001 bis 0,5 Gew.-%, und
- Z-B-7) in einer Menge von 0 bis 1 Gew.-%, bevorzugt von 0,01 bis 0,5 Gew.-%,

jeweils bezogen auf die Gesamtmasse der Zusammensetzung Z-B, erhalten

Die Komponente Z-B-1 liegt in einer Menge von 25 bis 75 Gew.-%, bevorzugt von 40 bis 70 Gew.-%, bezogen auf die Gesamtmasse der Zusammensetzung Z-B vor. Vorzugsweise umfasst die Komponente Z-B-1 multifunktionelles, oligomeres Urethan(meth)acrylat mit einem Molekulargewicht (MW) > 650 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und difunktionelles Urethan(meth)acrylat mit einem Molekulargewicht (MW) im Bereich von 400 bis 550 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-B-1.

Das multifunktionelle, oligomere Urethan(meth)acrylat mit einem Molekulargewischt (MW) > 650 g/mol umfasst dabei vorzugsweise ein Urethan-Monomer ausgewählt aus der Gruppe bestehend aus $H_2C{=}C(R^1)\text{-}C({=}O)\text{-}O\text{-}R^2\text{-}O\text{-}C({=}O)\text{-}NH\text{-}R^3\text{-}NH\text{-}C({=}O)\text{-}[O\text{-}R^4\text{-}O\text{-}C({=}O)\text{-}NH\text{-}R^3\text{-}NH\text{-}C({=}O)\text{-}]_nO\text{-}R^2\text{-}O\text{-}C({=}O)\text{-}C(CR^1){=}CH_2$ und

$[H_2C{=}C(R^1)C({=}O)\text{-}O\text{-}R^2\text{-}O\text{-}C({=}O)\text{-}NH\text{-}R^3\text{-}NH\text{-}C({=}O)\text{-}O\text{-}]_mR^5$, wobei $R^1$ ein Wasserstoffatom oder eine Methylgruppe ist,
$R^2$ eine geradkettige oder verzweigte C2- bis C4-Alkylengruppe ist,
$R^3$ eine geradkettige, verzweigte und/oder cyclische C2- bis C15-Alkylen-, Arylen-, Arylalkylen- oder Alkylarylengruppe ist,
$R^4$ eine divalente organische Linkergruppe ist,
$R^5$ eine m-valente organische Linkergruppe ist,
n eine ganze Zahl von 0 bis 6 ist und
m eine ganze Zahl von 3 bis 6 ist.

In einer bevorzugten Ausführungsform ist $R^2$ ausgewählt aus der Gruppe bestehend aus

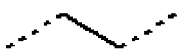
,
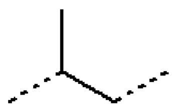
,
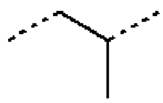
,
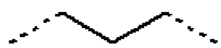

und

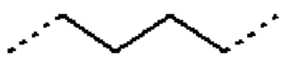
,

wobei $R^2$ jeweils mit der linken gestrichelten Linie an Sauerstoffatom der (Meth)acrylatgruppe und mit der rechten gestrichelten Linie an das Sauerstoffatom der Urethangruppe gebunden ist.

In einer bevorzugten Ausführungsform ist $R^3$ ausgewählt aus der Gruppe bestehend aus

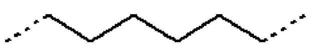
,
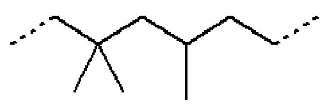
,
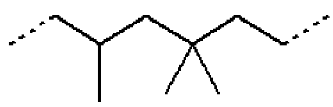
,

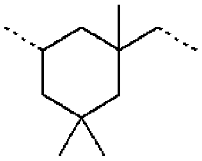,
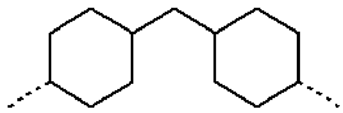,
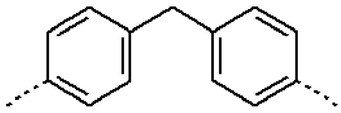,

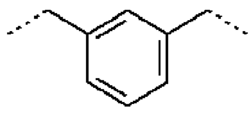 und 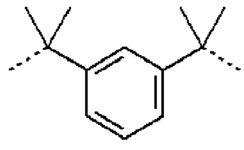,

wobei $R^3$ jeweils mit einer gestrichelten Linie an ein Stickstoffatom der Urethangruppe gebunden ist.

In einer besonders bevorzugten Ausführungsform ist $R^3$ ausgewählt aus der Gruppe bestehend aus

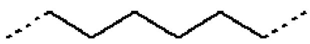,
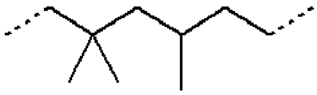,
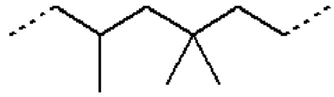

und

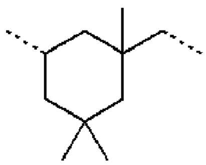.

In einer bevorzugten Ausführungsform ist $R^4$ ein von einem Diol abgeleiteter Rest, wobei das Diol ausgewählt ist aus der Gruppe bestehend aus Ethylenglycol, Diethylenglycol, Triethylenglycol, Tetraethylenglycol, Polyethylenglycol, Propylenglycol, Dipropylenglycol, Tripropylenglycol, Tetrapropylenglycol, Polypropylenglycol, 1,3-Butandiol, 1,4-Butandiol, Poly-(1,4-butylenglycol), Neopentylglycol, 1,6-Hexandiol, 1,4-Cyclohexandiol, 1,10-Decandiol, 1,12-Dodecandiol, $H[O-(CH_2)_5-C(=O)]_aO-CH_2CH_2-O[C(=O)-(CH_2)_5-O]_bH$ mit a = 1 bis 10 und b = 1 bis 10, $H[O-(CH_2)_5-C(=O)]_cO-CH_2CH_2-O-CH_2CH_2-O[C(=O)-(CH_2)_5-O]_dH$ mit c = 1 bis 10 und d = 1 bis 10 und $HO-CH_2CH_2O-[C=(O)-(CH_2)_4-C(=O)-OCH_2CH_2O]_e-H$ mit e = 1 bis 10.

In einer bevorzugten Ausführungsform ist $R^5$ ein von einem Polyol abgeleiteter Rest, wobei das Polyol ausgewählt ist aus der Gruppe bestehend Glycerol, Trimethylolpropan, Ditrimethylolpropan, Pentaerythritol und Dipentaerythritol.

Das difunktionelles Urethan(meth)acrylat mit einem Molekulargewicht (MW) im Bereich von 400 bis 550 g/mol umfasst dabei vorzugsweise ein Urethan(meth)acrylat ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexadecan-1,16-dioxydi(meth)acrylat, 1,5,5-Trimethyl-1-[(2-(meth)acryloyloxyethyl)carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenyleniminocarbonyloxy-2,1-ethandiyl)]bis(meth)-acrylat (CAS 51243-61-9 Methacrylat; CAS 69790-08-5 Acrylat), 1,1'-[Methylenbis(2,1-phenyleniminocarbonyloxy-2,1-ethandiyl)]bis(meth)acrylat.

Die Komponente Z-B-2 liegt in einer Menge von 20 bis 60 Gew.-%, bevorzugt von 25 bis 50 Gew.-%, bezogen auf die Gesamtmasse der Zusammensetzung Z-B vor. Vorzugsweise ist die Komponente Z-B-2 ausgewählt aus der Gruppe bestehend aus 2-Hydroxyethyl(meth)acrylat, 2-Hydroxypropyl(meth)acrylat, 3-Hydroxypropyl(meth)acrylat, Tetrahydrofurfuryl(meth)acrylat, 4-(Meth)acryloylmorpholin, Cyclohexyl(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)methyl(meth)acrylat, Benzyl-(meth)acrylat, 2-Phenoxyethyl(meth)acrylat, 2-Ethoxyethyl(meth)acrylat, 2-(2-Ethoxy-ethoxy)ethyl(meth)acrylat, 2-[2-(2-Ethoxyethoxy)ethoxy]ethyl(meth)acrylat, 2-Methoxyethyl(meth)acrylat, 2-(2-Methoxyethoxy)ethyl(meth)acrylat, 2-[2-(2-Methoxyethoxy)-ethoxy]ethyl(meth)acrylat, Hexyl(meth)acrylat, 2-Ethylhexyl(meth)acrylat, Decyl(meth)acrylat, Isodecyl(meth)acrylat, Dodecyl(meth)acrylat, 2-[[(Butylamino)carbonyl]-oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat.

Die Komponente Z-B-3 liegt in einer Menge von 1 bis 20 Gew.-%, bevorzugt von 2 bis 15 Gew.-%, bezogen auf die Gesamtmasse der Zusammensetzung Z-B vor. Vorzugsweise ist die Komponente Z-B-3 ausgewählt aus der Gruppe bestehend aus Ethylenglycol-di(meth)acrylat, Diethylenglycoldi(meth)acrylat, Triethylenglycoldi(meth)acrylat, Tetra-ethylenglycoldi(meth)acrylat, Polyethylenglycoldi(meth)acrylat, Propylenglycoldi(meth)-acrylat, Dipropylenglycoldi(meth)acrylat, Tripropylenglycoldi(meth)acrylat, Tetrapropy-lenglycoldi(meth)acrylat, Polypropylenglycoldi(meth)acrylat, 1,4-Butandioldi(meth)acrylat, 1,3-Butandioldi(meth)acrylat, 1,6-Hexandioldi(meth)acrylat, 1,10-Decandioldi(meth)-acrylat, 1,12-Dodecandioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropant-ri(meth)acrylat, Pentaerythritoldi(meth)acrylat, Pentaerythritoltri(meth)acrylat, Pentaeryth-ritoltetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxyphenyl]-propan, 2,2-Bis[4-(meth)acryloyloxydiethoxyphenyl]propan, 2,2-Bis[4-(meth)acryloyloxy-triethoxyphenyl]propan 2,2-Bis[4-(meth)acryloyloxytetraethoxyphenyl]propan, 2,2-Bis[4-(meth)acryloyloxypentaethoxyphenyl]-propan, 2,2-Bis[4-(meth)acryloyloxydipropoxy-phenyl]propan, 2,2-Bis[4-(meth)acryloyloxyethoxyphenyl]-2-[4-(meth)acryloyloxydiethoxy-phenyl]propan, 2-[4-(Meth)acryloyloxydiethoxyphenyl]-2-[4-(meth)-acryloyloxytriethoxy-phenyl]propan, 2-[4-(Meth)acryloyloxydipropoxyphenyl]-2-[4-(meth)acryloyloxytriethoxy-phenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.0$^{2,6}$]decan.

Die Komponente Z-B-4 liegt in einer Menge von 0,1 bis 5 Gew.-%, bevorzugt von 0,5 bis 3 Gew.-%, bezogen auf die Gesamtmasse der Zusammensetzung Z-B vor. Vorzugsweise ist die Komponente Z-B-4 ausgewählt aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)phosphinate (CAS 84434-11-7) und (Poly(oxy-1,2-ethanediyl),$\alpha$,$\alpha'$,$\alpha''$-1,2,3-propanetriyltris[w-[[phenyl(2,4,6-trimethylbenzoyl)phosphinyl]oxy]-Polymer) (CAS 1834525-17-5).

Die Komponente Z-B-5 liegt in einer Menge von 0,01 bis 1 Gew.-%, bevorzugt von 0,01 bis 0,1 Gew.-%, bezogen auf die Gesamtmasse der Zusammensetzung Z-B vor. Vorzugsweise ist die Komponente Z-B-5 ausgewählt aus der Gruppe bestehend aus Hydrochinon, Hydrochinonmonomethylether, 2,6-Di-*tert*.-butyl-4-methylphenol, *tert*.-Butylhydroxyanisol und 2,2,6,6-Tetramethyl-piperidin-1-oxyl.

Optional kann die Zusammensetzung Z-B auch Farbmittel (Z-B-6) enthalten. Die Komponente Z-B-6 liegt in einer Menge von 0 bis 1 Gew.-%, bevorzugt von 0,0001 bis 0,5 Gew.-%, bezogen auf die Gesamtmasse der Zusammensetzung Z-B vor. Vorzugsweise umfasst die Komponente Z-B-6 anorganische Farbpigmente, organische Farbpigmente oder organische Farbstoffe.

Optional kann die Zusammensetzung Z-B auch UV-Absorber (Z-B-7) enthalten. Die Komponente Z-B-7 liegt in einer Menge von 0 bis 1 Gew.-%, bevorzugt von 0,01 bis 0,5 Gew.-%, bezogen auf die Gesamtmasse der Zusammensetzung Z-B vor. Vorzugsweise ist die Komponente Z-B-7 ausgewählt aus der Gruppe bestehend aus 2,2'-Methylenbis[6-(2H-benzotriazol-2-yl)-4-(1,1,3,3-tetramethylbutyl)phenol] (CAS 103597-45-1), 2,2',4,4'-Tetrahydroxybenzophenon (CAS 131-55-5), 2-*tert*.-Butyl-6-(5-chloro-2H-benzotriazol-2-yl)-4-methylphenol (CAS 3896-11-5), 2,2'-Benzol-1,4-diylbis(4H-3,1-benzoxazin-4-on) (CAS 18600-59-4), 2-(4,6-Bis-(2,4-dimethylphenyl)-1,3,5-triazin-2-yl)-5-(octyloxy)-phenol (CAS 2725-22-6), 2-(2-Hydroxy-5-methylphenyl)benzotriazol (CAS 2440-22-4), 2-(2-Hydroxyphenyl)benzotriazol, 2-(2H-Benzotriazol-2-yl)-6-dodecyl-4-methylphenol (CAS 23328-53-2), 2-(2'-Hydroxy-3',5'-di-*tert*.-butylphenyl)-5-chlorobenzotriazol (CAS 3864-99-1), 2,2'-Dihydroxy-4-methoxybenzophenon (CAS 131-53-3), 2,2'-Dihydroxy-4,4'-dimethoxybenzophenon (CAS 131-54-4), Ethyl-2-cyano-3-(4-hydroxy-3-methoxyphenyl)prop-2-enoat (CAS 13373-29-0), Bis(1,2,2,6,6-pentamethyl-4-piperidyl)sebacat (CAS 41556-26-7), Methyl-1,2,2,6,6-pentamethyl-4-piperidylsebacat (CAS 82919-37-7), Bis(1-octyloxy-2,2,6,6-tetramethyl-4-piperidyl)sebacat (CAS 129757-67-1) und Bis-(1,2,2,6,6-pentamethyl-4-piperidyl)-[[3,5-bis(1,1-dimethylethyl)-4-hydroxyphenyl]methyl]-butylmalonat (CAS-Nr. 63843-89-0).

Klebstoffzusammensetzung (Z-C)

Als Klebstoffzusammensetzungen Z-C sind prinzipiell alle Klebstoffzusammensetzungen geeignet, die chemisch kompatibel mit den (Meth)acrylat-Zusammensetzungen Z-A und Z-B sind und die in der Lage sind die erste Schiene (S-A) und die zweite Schiene (S-B) zuverlässig und dauerhaft zu verkleben.

Vorzugsweise handelt es sich bei der Klebstoffzusammensetzungen Z-C ebenfalls um eine (Meth)acrylat-Zusammensetzungen. Bevorzugt handelt es sich bei der Klebstoffzusammensetzungen Z-C um die erste Zusammensetzung (Z-A) oder die zweite Zusammensetzung (Z-B).

Vorteilhafterweise wird die Klebstoffzusammensetzung Z-C nach der Herstellung der ersten duroplastischen Schiene (S-A) und der zweiten duroplastischen Schiene (S-B) auf die Innenseite (S-A-IS) der ersten Schiene und/oder

auf die Außenseite (S-B-AS) der zweiten Schiene aufgetragen. Anschließend werden die erste und zweite Schiene verklebt und dann zusammen nachpolymerisiert. Auf diese Weise ist ein zuverlässiger und dauerhafter Verbund der beiden Schienen gewährleistet.

Wenn es sich bei der Klebstoffzusammensetzungen Z-C wie beschrieben um die Zusammensetzung Z-A oder Z-B handelt, so gelten für die Klebstoffzusammensetzungen Z-C die im Rahmen dieser Anmeldung für die Zusammensetzungen Z-A oder Z-B gemachten Aussagen und vorteilhaften Ausgestaltungen entsprechend.

In einer weiteren vorteilhaften Ausgestaltung weisen bei einer erfindungsgemäßen dentalen, duroplastischen Schienenanordnung die erste Schiene (S-A) ein oder mehrere erste Positionierungsmittel (P-A) und die zweite Schiene (S-B) ein oder mehrere entsprechende zweite Positionierungsmittel (P-B) auf. Auf diese Weise lassen sich erste und zweite Schiene in der korrekten Relation zu einander kombinieren und verkleben.

Erfindungsgemäß wird nach einem weiteren Aspekt ein Verfahren zur Herstellung einer dentale, duroplastische Schienenanordnung vorgeschlagen, wie es in Anspruch 12 definiert ist, nämlich ein

Verfahren zur Herstellung einer dentalen, duroplastischen Schienenanordnung, mit den folgenden Schritten

i) Herstellen oder Bereitstellen einer ersten Zusammensetzung (Z-A) umfassend die Bestandteile Z-A-1, Z-A-2, Z-A-3, Z-A-4, Z-A-5, optional Z-A-6 und optional Z-A-7,

ii) Bereitstellen eines ersten Datensatzes (D-A),

iii) Herstellen einer ersten Schiene (S-A) in einer Form entsprechend des ersten Datensatzes (D-A) durch Polymerisation der ersten Zusammensetzung (Z-A),

iv) Herstellen oder Bereitstellen einer zweiten Zusammensetzung (Z-B) umfassend die Bestandteile Z-B-1, Z-B-2, Z-B-3, Z-B-4, Z-B-5, optional Z-B-6 und optional Z-B-7,

v) Bereitstellen eines zweiten Datensatzes (D-B),

vi) Herstellen einer zweiten Schiene (S-B) in einer Form entsprechend des zweiten Datensatzes (D-B) durch Polymerisation der zweiten Zusammensetzung (Z-B), und

vii) Kombinieren der ersten Schiene (S-A) und der zweiten Schiene (S-B) zu einer Schienenanordnung, bevorzugt durch Verkleben der ersten Schiene (S-A) und der zweiten Schiene (S-B) mit einer Klebstoffzusammensetzung (Z-C).

In einer bevorzugten Ausgestaltung handelt es sich um ein Verfahren zur Herstellung einer dentalen, duroplastischen Schienenanordnung wobei

der erste Datensatz (D-A) einen ersten Teildatensatz (D-A-IS) umfasst, der der Innenseite (S-A-IS) der ersten Schiene (S-A) entspricht, und einen zweiten Teildatensatz (D-A-AS) umfasst, der der Außenseite (S-A-AS) der ersten Schiene (S-A) entspricht, und

der zweite Datensatz (D-B) einen dritten Teildatensatz (D-B-IS) umfasst, der der Innenseite (S-B-IS) der zweiten Schiene (S-B) entspricht, und einen vierten Teildatensatz (D-B-AS) umfasst, der der Außenseite (S-B-AS) der zweiten Schiene (S-B) entspricht, und

wobei der dritte Teildatensatz (D-B-IS) der äußeren Form Zahnbogens entspricht.

In einer weiteren bevorzugten Ausgestaltung handelt es sich um ein Verfahren zur Herstellung einer dentalen, duroplastischen Schienenanordnung wobei

der vierte Teildatensatz (D-B-AS) durch Addition einer Wandstärke (W-B) im Bereich von 0,2 bis 2 mm zum dritten Teildatensatz (D-B-IS) generiert wird und der erste Teildatensatz (D-A-IS) dem vierten Teildatensatz (D-B-AS) entspricht und der zweite Teildatensatz (D-A-AS) durch Addition einer Wandstärke (W-A) im Bereich von 0,2 bis 2 mm zum ersten Teildatensatz (D-A-IS) generiert wird
oder

der vierte Teildatensatz (D-B-AS) durch Addition einer Wandstärke (W-B) im Bereich von 0,2 bis 2 mm zum dritten Teildatensatz (D-B-IS) generiert wird und der zweite Teildatensatz (D-A-AS) durch Addition einer Gesamtwandstärke (W-AB) im Bereich von 0,5 bis 4 mm zum dritten Teildatensatz (D-B-IS) generiert wird und der vierte Teildatensatz

(D-B-AS) dem ersten Teildatensatz (D-A-IS) entspricht
oder

der zweite Teildatensatz (D-A-AS) durch Addition einer Gesamtwandstärke (W-AB) im Bereich von 0,5 bis 4 mm zum dritten Teildatensatz (D-B-IS) generiert wird und der erste Teildatensatz (D-A-IS) durch Subtraktion einer Wandstärke (W-A) im Bereich von 0,2 bis 2 mm vom zweiten Teildatensatz (D-A-AS) generiert wird und der vierte Teildatensatz (D-B-AS) dem ersten Teildatensatz (D-A-IS) entspricht
oder

der vierte Teildatensatz (D-B-AS) durch Ausblocken in einer Wandstärke (W-B) im Bereich von 0,2 bis 2 mm generiert wird und der erste Teildatensatz (D-A-IS) dem vierten Teildatensatz (D-B-AS) entspricht und der zweite Teildatensatz (D-A-AS) durch Modellierung in einer Wandstärke (W-A) im Bereich von 0,2 bis 2 mm generiert wird.

Erfindungsgemäß ist auch eine erfindungsgemäße dentale, duroplastische Schienenanordnung zur Anwendung in einem therapeutischen Verfahren zur Behandlung von Zahnfehlstellungen, Knirschen, Bruxismus oder Schlafapnoe-Syndrom.
Erfindungsgemäß ist auch die Verwendung einer erfindungsgemäßen dentalen, duroplastischen Schienenanordnung zur Behandlung von Zahnfehlstellungen, Knirschen, Bruxismus oder Schlafapnoe-Syndrom.

Ausführungsbeispiele:

Die Ziele und Vorteile dieser Offenbarung werden durch die folgenden Beispiele weiter veranschaulicht, aber die spezifischen Materialien und deren Mengen, die in diesen Beispielen genannt werden, sowie andere Bedingungen und Details sollten nicht so ausgelegt werden, dass sie diese Offenbarung unangemessen einschränken.
Die in den Beispielen verwendeten Materialien werden im Folgenden zusammengefasst.

| | |
|---|---|
| TMDI | 2,2,4-Trimethylhexamethylendiisocyanat / 2,4,4-Trimethylhexamethylendiisocyanat (Isomerengemisch; CAS 32052-51-0) |
| IPDI | Isophorondiisocyanat (CAS 4098-71-9) |
| DBTL | Dibutylzinndilaurat (CAS 77-58-7) |
| BHT | 2,6-Di-*tert*.-butyl-4-methylphenol (CAS 128-37-0) |
| TMDI-UDMA | 7,7,9-Trimethyl-3,14-dioxa-4,13-dioxo-5,12-diazahexadecan-1,16-dioxydi(meth)acrylat / 7,9,9-Trimethyl-3,14-dioxa-4,13-dioxo-5,12-diazahexadecan-1,16-dioxydi(meth)acrylat (Isomerengemisch; CAS 72869-86-4) |
| IPDI-UDMA | 1,5,5-Trimethyl-1 -[(2-methacryloyloxyethyl)carbamoylmethyl]-3-(2-methacryloyloxyethyl) carbamoylcyclohexan (CAS 42405-01-6) |
| IBOA | Isobornylacrylat (CAS 5888-33-5) |
| HPMA | Hydroxypropylmethacrylat (CAS 27813-02-1) |
| TEDMA | Triethylenglycoldimethacrylat (CAS 109-16-0) |
| TCDDMA | Octahydro-4,7-methano-1H-indendiyl)bis(methylen)bismethacrylat (CAS 43048-08-4) |
| TPO | Diphenyl(2,4,6-trimethylbenzoyl)phosphinoxid (CAS 75980-60-8) |

Messmethoden:

3-Punkt-Biegefestigkeit (BF): Die Biegefestigkeiten wurden angepasst an ISO 4049:2009 bestimmt. Aus den Druckharzen wurden mittels 3D-Druck (SolFlex350, W2P Engineering GmbH; Wellenlänge 385 nm, Leistung 8.3 $mW/cm^2$, Pixelgröße 50 $\mu$m, Schichtstärke 50 $\mu$m) Prüfkörper mit der Abmessung 40 mm x 5 mm x 5 mm hergestellt und mit einem Otoflash (VOCO GmbH) mit 2x2000 Blitzen nachbelichtet. Die Bestimmung der Biegefestigkeit erfolgt bei einer Vorschubgeschwindigkeit von 1 mm/min an einer Zwick-Universalprüfmaschine (Zwick GmbH & Co. KG, Ulm).
Elastizitäsmodul (E-Modul): Der Elastizitätsmodul wurde analog der Berechnung in ADA Spec. No. 27:1993 (7.8.4.2) als Steigung der Spannung-Dehnungs-Kurve der 3-Punkt-Biegefestigkeitsmessung im linear-elastischen Bereich ermittelt.

$$E = \frac{3\,L}{4\,b\,h^3}\frac{\Delta F}{\Delta d}$$

(L: Stützweite; b: Probenbreite; h: Probendicke; $\Delta$d: Deformation im linear-elastischen Bereich; $\Delta$F: Kraftänderung bei einer Deformation $\Delta$d)

Viskosität: Gemessen wurde standardmäßig an einem Rheometer der Firma Anton Paar des Typs Physica MCR 301 mit einer 50 mm-Messplatte (Platte/Platte), 0.5 mm Spaltabstand und 1 g Substanz. Vor der Messung wird die Platte auf eine Temperatur von 25 °C temperiert. Die Messdauer beträgt 30 s bei einer Scherrate von 10/s.

Molekulargewicht (MW): Das Molekulargewicht wurde mit Hilfe einer GPC (Agilent Technologies 1260 Infinity) bestimmt. Das System besteht aus einer Vorsäule (Länge 50 mm, Durchmesser 8 mm, Partikelgröße 5 $\mu$m) und zwei Hauptsäulen (I: Länge 300 mm, Durchmesser 8 mm, Partikelgröße 5 $\mu$m, 50 A; II: Länge 300 mm, Durchmesser 8 mm, Partikelgröße 5 $\mu$m, 100 A). Als Laufmittel wird THF verwendet. Als Standard wird Polystyrol verwendet.

Beispiel 1a:

63.08 g (0.3 mol) TMDI wurden in 400 ml Chloroform gelöst. Anschließend wurden 21.2 g (0.2 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 31.0 g (0.2 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 1150 g/mol.

Beispiel 1b:

66.7 g (0.3 mol) IPDI wurden in 400 ml Chloroform gelöst. Anschließend wurden 21.2 g (0.2 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 31.0 g (0.2 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 1190 g/mol.

Beispiel 1c:

63.08 g (0.3 mol) TMDI wurden in 400 ml Chloroform gelöst. Anschließend wurden 26.5 g (0.25 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 15.5 g (0.1 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 2100 g/mol.

Beispiel 1d:

63.08 g (0.3 mol) TMDI wurden in 400 ml Chloroform gelöst. Anschließend wurden 28.3 g (0.267 mol) Diethylenglycol, 200 mg Dibutylzinndilaurat und 100 mg BHT zugegeben. Es wurde unter Rühren für 2 Stunden auf 55 °C erwärmt. Es wurde auf Raumtemperatur abgekühlt und es wurden 10.3 g (0.067 mol) 2-Isocyanatoethylmethacrylat zugegeben. Anschließend wurde für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 3050 g/mol.

Beispiel 1e:

100 mg Dibutylzinndilaurat wurden in 126.2 g (0.6 mol) TMDI gelöst. Anschließend wurden über 2 Stunden langsam 9.2 g (0.1 mol) wasserfreies Glycerin getropft. Die Temperatur wurde dabei zwischen 50 und 55 °C gehalten. Nach beendeter Zugabe wurde weitere 3 Stunden bei 55 °C gerührt. Der Überschuss des Diisocyanates wurde im Vakuum (0.1 mbar) bei 150 bis 170 °C abdestilliert. Das Reaktionsprodukt wurde in 400 ml Chloroform gelöst und es wurden 100 mg Dibutylzinndilaurat und 100 mg BHT zugegeben. Anschließend wurden 46.5 g (0.3 mol) 2-Isocyanato-

ethylmethacrylat zugegeben und für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 1190 g/mol.

Beispiel 1f:

100 mg Dibutylzinndilaurat wurden in 133.4 g (0.6 mol) IPDI gelöst. Anschließend wurden über 2 Stunden langsam 9.2 g (0.1 mol) wasserfreies Glycerin getropft. Die Temperatur wurde dabei zwischen 50 und 55 °C gehalten. Nach beendeter Zugabe wurde weitere 3 Stunden bei 55 °C gerührt. Der Überschuss des Diisocyanates wurde im Vakuum (0.1 mbar) bei 150 bis 170 °C abdestilliert. Das Reaktionsprodukt wurde in 400 ml Chloroform gelöst und es wurden 100 mg Dibutylzinndilaurat und 100 mg BHT zugegeben. Anschließend wurden 46.5 g (0.3 mol) 2-Isocyanatoethylmethacrylat zugegeben und für weitere 6 Stunden auf 55 °C erwärmt. Als Reaktionskontrolle wurde das Verschwinden der NCO-Bande bei ca. 2270 cm-' im IR-Spektrum beobachtet. Anschließend wurde das Lösungsmittel im Vakuum entfernt. Es wurde eine schwach gelbe Flüssigkeit erhalten. Das mittlere Molekulargewicht betrug 1220 g/mol.

Beispiel 2A:

Für die Herstellung der Zusammensetzungen Z-A wurden die in Tabelle 1 aufgeführten Bestandteile jeweils in den angegebenen Mengen eingewogen und mit einem KPG-Rührwerk für 60 Minuten bei Raumtemperatur gerührt, bis eine homogene Lösung entstanden war.

Tabelle 1:

| Beispiel | | 2A-1 | 2A-2 | 2A-3 | 2A-4 |
|---|---|---|---|---|---|
| Z-A-1 | TMDI-UDMA | 60.00 | | 50.00 | |
| | IPDI-UDMA | | 60.00 | | 50.00 |
| | Beispiel 1a | | | 10.00 | |
| | Beispiel 1b | | | | 10.00 |
| Z-A-2 | IBOA | 10.00 | | 10.00 | |
| | HPMA | | 8.50 | | 8.50 |
| Z-A-3 | TEDMA | 28.50 | | 28.50 | |
| | TCDDMA | | 30.00 | | 30.00 |
| Z-A-4 | TPO | 1.50 | 1.50 | 1.50 | 1.50 |
| E-Modul [MPa] | | 1950 | 1900 | 1780 | 1765 |

Beispiel 2B:

Für die Herstellung der Zusammensetzungen Z-B wurden die in den Tabelle 2 und 3 aufgeführten Bestandteile jeweils in den angegebenen Mengen eingewogen und mit einem KPG-Rührwerk für 60 Minuten bei Raumtemperatur gerührt, bis eine homogene Lösung entstanden war.

Tabelle 2:

| Beispiel | | 2B-1 | 2B-2 | 2B-3 | 2B-4 |
|---|---|---|---|---|---|
| Z-B-1 | Beispiel 1a | 55.00 | | 50.00 | |
| | Beispiel 1b | | 55.00 | | 50.00 |
| | TMDI-UDMA | | | 10.00 | |
| | IPDI-UDMA | | | | 10.00 |
| Z-B-2 | IBOA | 40.00 | 40.00 | 35.00 | 35.00 |
| Z-B-3 | TEDMA | 3.50 | 3.50 | 3.50 | 3.50 |
| Z-B-4 | TPO | 1.50 | 1.50 | 1.50 | 1.50 |

(fortgesetzt)

| Beispiel | | 2B-1 | 2B-2 | 2B-3 | 2B-4 |
|---|---|---|---|---|---|
| E-Modul [MPa] | | 122 | 114 | 245 | 232 |

Tabelle 3:

| Beispiel | | 2B-5 | 2B-6 | 2B-7 | 2B-8 |
|---|---|---|---|---|---|
| Z-B-1 | Beispiel 1c | 55.00 | | | |
| | Beispiel 1d | | 55.00 | | |
| | Beispiel 1e | | | 55.00 | |
| | Beispiel 1f | | | | 55.00 |
| Z-B-2 | IBOA | 40.00 | 40.00 | 40.00 | 40.00 |
| Z-B-3 | TEDMA | 3.50 | 3.50 | 3.50 | 3.50 |
| Z-B-4 | TPO | 1.50 | 1.50 | 1.50 | 1.50 |
| E-Modul [MPa] | | 78 | 42 | 39 | 33 |

Beispiel 3

Für die Herstellung der Schienen wurde bei drei Probanden die Zahnsituation durch Abformung aufgenommen (V-Posil medium, VOCO GmbH). Anschließend wurden die Abdrücke durch Einscannen (3shape E3 Desktopscanner, 3Shape A/S) in digitale Datensätze umgewandelt. Auf Basis dieser digitalen Datensätze wurden digitale Datensätze für die Schienen erstellt (exocad Dental CAD - Bite Splint Module, exocad GmbH). Dabei wurden die Datensätze so designt, dass sie Teildatensätze für innere und äußere Schiene mit jeweils einer mittleren Schichtstärke von ca. 1.5 mm aufwiesen. Außerdem wurde ein Klebespalt von 25 μm für die spätere Verklebung eingeplant. Anschließend wurden anhand dieser Teildatensätze die äußeren Teilschienen (S-A) aus den Zusammensetzungen Z-A und die inneren Teilschienen (S-B) aus den Zusammensetzungen Z-B gedruckt (SolFlex350, W2P Engineering GmbH; Wellenlänge 385 nm, Leistung 8.3 mW/cm$^2$, Pixelgröße 50 μm, Schichtstärke 50 μm). Anschließend wurde eine dünne Schicht der jeweiligen Zusammensetzung Z-A auf die Innenseite der äußeren Teilschiene aufgetragen und innere und äußere Schiene wurden verklebt. Die endgültige Verklebung erfolgte anschließend im Rahmen der Nachbelichtung (Otoflash, VOCO GmbH, 2x2000 Blitze).

Für die Beurteilung des Tragekomforts trugen die Probenden die für sie jeweils passenden Schienen für einen Zeitraum von 12 Stunden (über Nacht). Anschließend erfolgte eine subjektive Bewertung nach folgenden Kriterien ("--" sehr unangenehm / "-" unangenehm / "o" ungewohnt / "++" gut / "++" sehr gut). Die Angaben in den Tabelle 4 bis 7 sind die Summe aus den drei Einzelbeurteilungen. Waren sich die drei Probanden in der Beurteilung einig, entspricht die Angabe auch den drei Einzelbeurteilungen. Gab es unterschiedliche Einzelbeurteilungen, setzten sich die drei Probenden anschließend zusammen und einigten sich auf eine Gesamtbeurteilung.

Für die Beurteilung der Genauigkeit wurden aus den Daten der Probanden Modelle aus V-Print model beige (VOCO GmbH) gemäß Herstellerangaben gedruckt (SolFlex350, W2P Engineering GmbH; Wellenlänge 385 nm, Leistung 8.3 mW/cm$^2$, Pixelgröße 50 μm, Schichtstärke 50 μm) und nachbelichtet (Otoflash, VOCO GmbH, 2x2000 Blitze). Die Schienen wurden jeweils auf die entsprechenden Modelle aufgesetzt und die Passgenauigkeit bewertet ("++" sehr gute Passung / "+" gute Passung / "o" akzeptable Passung / "-" kleinere, einzelne oder lokale Ungenauigkeiten / "--" größere, zahlreiche oder deutliche Ungenauigkeiten).

Für die Beurteilung der (Form)stabilität wurden die Schienen auf die entsprechenden Modelle aufgesetzt in demineralisiertem Wasser in einem Kausimulator (CS-4.4 professional, SD Mechatronik GmbH) bei 37 °C für 5000 Zyklen jeweils im Wechsel mit einem Druck von 50 N belastet und entlastet. Anschließend wurde das Aussehen der Schiene sowie die Passgenauigkeit überprüft und bewertet ("++"/ "+" / "o" / "-" / "--").

In den Tabellen 4 bis 6 sind die getesteten Kombinationen aus innerer und äußerer Schiene sowie die Beurteilungen dargestellt.

Tabelle 4:

| Beispiel | 3a | 3b | 3c | 3d |
|---|---|---|---|---|
| Äußere Schiene (S-A) | Beispiel 2A-1 | Beispiel 2A-1 | Beispiel 2A-1 | Beispiel 2A-1 |
| Innere Schiene (S-B) | Beispiel 2B-1 | Beispiel 2B-2 | Beispiel 2B-3 | Beispiel 2B-4 |
| Tragekomfort | + | + | ++ | ++ |
| Genauigkeit | ++ | ++ | ++ | ++ |
| Formstabilität | ++ | ++ | ++ | ++ |

Tabelle 5:

| Beispiel | 3e | 3f | 3g | 3h |
|---|---|---|---|---|
| Äußere Schiene (S-A) | Beispiel 2A-2 | Beispiel 2A-3 | Beispiel 2A-4 | Beispiel 2A-3 |
| Innere Schiene (S-B) | Beispiel 2B-1 | Beispiel 2B-1 | Beispiel 2B-1 | Beispiel 2B-4 |
| Tragekomfort | + | ++ | ++ | ++ |
| Genauigkeit | ++ | ++ | ++ | ++ |
| Formstabilität | ++ | ++ | ++ | ++ |

Tabelle 6:

| Beispiel | 3i | 3j | 3k | 3l |
|---|---|---|---|---|
| Äußere Schiene (S-A) | Beispiel 2A-3 | Beispiel 2A-3 | Beispiel 2A-3 | Beispiel 2A-3 |
| Innere Schiene (S-B) | Beispiel 2B-5 | Beispiel 2B-6 | Beispiel 2B-7 | Beispiel 2B-8 |
| Tragekomfort | ++ | ++ | ++ | ++ |
| Genauigkeit | ++ | ++ | ++ | ++ |
| Formstabilität | ++ | ++ | ++ | ++ |

Vergleichsbeispiel 4:

Als Vergleich wurden duroplastische Schienenanordnungen hergestellt, bei denen für die innere und die äußere Schiene jeweils die gleichen Zusammensetzungen gewählt wurden. Die Ergebnisse sind in Tabelle 7 zusammengefasst. Bei duroplastischen Schienenanordnungen, die nur aus Zusammensetzungen Z-A bestanden wurde der Tragekomfort schlechter bewertet. Dies entspricht im Wesentlichen dem Stand der Technik, bei dem eine einteilige duroplastische Schiene in einem generativen Verfahren hergestellt wird. Bei duroplastischen Schienenanordnungen, die nur aus Zusammensetzungen Z-B bestanden wurden die Schienen insgesamt als "zu weich" wahrgenommen.

Tabelle 7:

| Vergleichseispiel | 4a | 4b | 4c | 4d |
|---|---|---|---|---|
| Äußere Schiene (S-A) | Beispiel 2A-1 | Beispiel 2A-3 | Beispiel 2B-1 | Beispiel 2B-3 |
| Innere Schiene (S-B) | Beispiel 2A-1 | Beispiel 2A-3 | Beispiel 2B-1 | Beispiel 2B-3 |
| Tragekomfort | - | - | 0 | 0 |
| Genauigkeit | ++ | ++ | ++ | ++ |
| Formstabilität | ++ | ++ | - | - |

Vergleichsbeispiel 5:

Aus den Zusammensetzungen 2A-1 und 2B-1 wurden jeweils einteilige Schienen hergestellt, wobei jeweils die Gesamtdatensätze verwendet wurden. Die Beurteilungen dieser beiden Schienen entsprachen den Beurteilungen der Vergleichsbeispiele 4a und 4c.

Vergleichsbeispiel 6:

Zum Vergleich wurden Schienen aus einem thermoplatischen, zweischichtigen Material (Erkoloc-pro, transparent Ø 120 mm, Stärke 3 mm, Erkodent) hergestellt. Dazu wurde auf Basis der digitalen Datensätze ein Modell für jeden Probanden hergestellt. Anschließend wurden die thermoplatischen Schienen durch Tiefziehen entsprechend der Herstellerangaben aus Erkoloc-pro hergestellt. Es ergab sich folgende Bewertung. Tragekomfort "+", Genauigkeit "--" und Formstabilität "+".

## Patentansprüche

**1.** Dentale, duroplastische Schienenanordnung umfassend

a) eine erste duroplastische Schiene (S-A) und
b) eine zweite duroplastische Schiene (S-B)

wobei die erste Schiene (S-A) eine Innenseite (S-A-IS) und eine Außenseite (S-A-AS) aufweist und wobei die zweite Schiene (S-B) eine Innenseite (S-B-IS) und eine Außenseite (S-B-AS) aufweist und wobei die Form der Innenseite (S-A-IS) der ersten Schiene der Form der Außenseite (S-B-AS) der zweiten Schiene entspricht, **dadurch gekennzeichnet, dass** die erste Schiene (S-A) einen höheren Elastizitätsmodul aufweist als die zweite Schiene (S-B).

**2.** Dentale, duroplastische Schienenanordnung nach Anspruch 1 zusätzlich umfassend c) eine Klebstoffzusammensetzung (Z-C)
wobei die Innenseite (S-A-IS) der ersten Schiene (S-A) und die Außenseite (S-B-AS) der zweiten Schiene (S-B) durch die Klebstoffzusammensetzung (Z-C) verklebt sind.

**3.** Dentale, duroplastische Schienenanordnung nach einem der vorangehenden Ansprüche, wobei

der Elastizitätsmodul der ersten Schiene (S-A) im Bereich von 500 MPa bis 2500 MPa, bevorzugt im Bereich von 1000 MPa bis 2500 MPa, besonders bevorzugt im Bereich von 1000 MPa bis 2000 MPa, liegt
und/oder
der Elastizitätsmodul der zweiten Schiene (S-B) im Bereich von 2 MPa bis 1200 MPa, bevorzugt im Bereich von 5 MPa bis 500 MPa, besonders bevorzugt im Bereich von 5 MPa bis 250 MPa, liegt.

**4.** Dentale, duroplastische Schienenanordnung nach einem der vorangehenden Ansprüche, wobei

die erste Schiene (S-A) durch Polymerisation einer ersten Zusammensetzung (Z-A) umfassend

Z-A-1) ein, zwei oder mehrere multifunktionelle Urethan(meth)acrylate,
Z-A-2) ein, zwei oder mehrere monofunktionelle (Meth)acrylate,
Z-A-3) ein, zwei oder mehrere multifunktionelle (Meth)acrylate ohne Urethangruppen,
Z-A-4) einen Photoinitiator oder ein Photoinitiatorsystem,
Z-A-5) ein, zwei oder mehrere Inhibitoren,
Z-A-6) optional Farbmittel und
Z-A-7) optional UV-Absorber

erhalten wird, und/oder
die zweite Schiene (S-B) durch Polymerisation einer zweiten Zusammensetzung (Z-B) umfassend

Z-B-1) ein, zwei oder mehrere multifunktionelle Urethan(meth)acrylate,
Z-B-2) ein, zwei oder mehrere monofunktionelle (Meth)acrylate,
Z-B-3) ein, zwei oder mehrere multifunktionelle (Meth)acrylate ohne Urethangruppen,
Z-B-4) einen Photoinitiator oder ein Photoinitiatorsystem,
Z-B-5) ein, zwei oder mehrere Inhibitoren,
Z-B-6) optional Farbmittel und
Z-B-7) optional UV-Absorber

erhalten wird.

**5.** Dentale, duroplastische Schienenanordnung nach einem der vorangehenden Ansprüche, wobei

die erste Schiene (S-A) durch Polymerisation einer ersten Zusammensetzung (Z-A) umfassend

Z-A-1) in einer Menge von 25 bis 75 Gew.-%, bevorzugt von 40 bis 70 Gew.-%,
Z-A-2) in einer Menge von 1 bis 20 Gew.-%, bevorzugt von 2 bis 15 Gew.-%,
Z-A-3) in einer Menge von 20 bis 60 Gew.-%, bevorzugt von 25 bis 50 Gew.-%,
Z-A-4) in einer Menge von 0,1 bis 5 Gew.-%, bevorzugt von 0,5 bis 3 Gew.-%,
Z-A-5) in einer Menge von 0,01 bis 1 Gew.-%, bevorzugt von 0,01 bis 0,1 Gew.-%,
Z-A-6) in einer Menge von 0 bis 1 Gew.-%, bevorzugt von 0,0001 bis 0,5 Gew.-%, und
Z-A-7) in einer Menge von 0 bis 1 Gew.-%, bevorzugt von 0,01 bis 0,5 Gew.-%,

jeweils bezogen auf die Gesamtmasse der Zusammensetzung Z-A, erhalten wird, und/oder
die zweite Schiene (S-B) durch Polymerisation einer zweiten Zusammensetzung (Z-B) umfassend

Z-B-1) in einer Menge von 25 bis 75 Gew.-%, bevorzugt von 40 bis 70 Gew.-%,
Z-B-2) in einer Menge von 20 bis 60 Gew.-%, bevorzugt von 25 bis 50 Gew.-%,
Z-B-3) in einer Menge von 1 bis 20 Gew.-%, bevorzugt von 2 bis 15 Gew.-%,
Z-B-4) in einer Menge von 0,1 bis 5 Gew.-%, bevorzugt von 0,5 bis 3 Gew.-%,
Z-B-5) in einer Menge von 0,01 bis 1 Gew.-%, bevorzugt von 0,01 bis 0,1 Gew.-%,
Z-B-6) in einer Menge von 0 bis 1 Gew.-%, bevorzugt von 0,0001 bis 0,5 Gew.-%, und
Z-B-7) in einer Menge von 0 bis 1 Gew.-%, bevorzugt von 0,01 bis 0,5 Gew.-%,

jeweils bezogen auf die Gesamtmasse der Zusammensetzung Z-B, erhalten wird.

**6.** Dentale, duroplastische Schienenanordnung nach einem der vorangehenden Ansprüche, wobei

die Komponente Z-A-1 difunktionelles Urethan(meth)acrylat mit einem Molekulargewicht im Bereich von 400 bis 550 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und multifunktionelles, oligomeres Urethan(meth)acrylat mit einem Molekulargewicht > 650 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%,jeweils bezogen auf die Gesamtmasse von Z-A-1, umfasst
und/oder
die Komponente Z-A-2 ausgewählt ist aus der Gruppe bestehend aus 2-Hydroxyethyl(meth)acrylat, 2-Hydroxypropyl(meth)acrylat, 3-Hydroxypropyl(meth)-acrylat, Tetrahydrofurfuryl(meth)acrylat, 4-(Meth)acryloylmorpholin, Cyclohexyl-(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)-methyl(meth)acrylat, Benzyl(meth)acrylat, 2-Phenoxyethyl(meth)acrylat, 2-Ethoxyethyl(meth)acrylat, 2-(2-Ethoxyethoxy)ethyl(meth)acrylat, 2-[2-(2-Ethoxyethoxy)-ethoxy]ethyl(meth)acrylat, 2-Methoxyethyl(meth)acrylat, 2-(2-Methoxyethoxy)-ethyl(meth)acrylat, 2-[2-(2-Methoxyethoxy)ethoxy]ethyl(meth)acrylat, Hexyl(meth)-acrylat, 2-Ethylhexyl(meth)acrylat, Decyl(meth)acrylat, Isodecyl(meth)acrylat, Dodecyl(meth)acrylat, 2-[[(Butylamino)carbonyl]oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat,
und/oder
die Komponente Z-A-3 ausgewählt ist aus der Gruppe bestehend aus Ethylenglycoldi(meth)acrylat, Diethylenglycoldi(meth)acrylat, Triethylenglycol-di(meth)acrylat, Tetraethylenglycoldi(meth)acrylat, Polyethylenglycoldi(meth)-acrylat, Propylenglycoldi(meth)acrylat, Dipropylenglycoldi(meth)acrylat, Tripropylen-glycoldi(meth)acrylat, Tetrapropylenglycoldi(meth)acrylat, Polypropylenglycol-di(meth)acrylat, 1,4-Butandioldi(meth)acrylat, 1,3-Butandioldi(meth)acrylat, 1,6-Hexandioldi(meth)acrylat, 1,10-Decandioldi(meth)acrylat, 1,12-Dodecandiol-di(meth)acrylat, 2-Hydroxypropyl-1,3-di(meth)acrylat, 3-Hydroxypropyl-1,2-di-(meth)acrylat, Neopentylglycoldi(meth)acrylat, Trimethylolpropantri(meth)acrylat, Pentaerythritoldi(meth)acrylat, Pentaerythritoltri(meth)acrylat, Pentaerythritol-tetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxy-phenyl]propan, 2,2-Bis[4-(meth)acryloyloxydiethoxyphenyl]propan, 2,2-Bis[4-(meth)acryloyloxytriethoxyphenyl]propan 2,2-Bis[4-(meth)acryloyloxytetraethoxy-phenyl]propan, 2,2-Bis[4-(meth)acryloyloxypentaethoxyphenyl]-propan, 2,2-Bis[4-(meth)acryloyloxydipropoxyphenyl]propan, 2,2-Bis[4-(meth)acryloyloxyethoxy-phenyl]-2-[4-(meth)acryloyloxydiethoxyphenyl]propan, 2-[4-(Meth)acryloyloxydi-ethoxyphenyl]-2-[4-(meth)-acryloyloxytriethoxyphenyl]propan, 2-[4-(Meth)acryloyl-oxydipropoxyphenyl]-2-[4-(meth)acryloyloxytriethoxyphenyl]propan, 2,2-Bis[4-(meth)acryloyloxyisopropoxyphenyl]propan, ethoxyliertes Bisphenol-A-di(meth)acrylat, propoxyliertes Bisphenol-A-di(meth)acrylat und 3(4),8(9)-Bis((meth)acryloyloxymethyl)tricyclo[5.2.1.$0^{2,6}$]decan,
und/oder
die Komponente Z-A-4 ausgewählt ist aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenyl-bis(2,4,6-trimethylbenzoyl)phosphinoxid, Ethyl phenyl(2,4,6-trimethylbenzoyl)-phosphinate (CAS 84434-11-7) und (Poly(oxy-1,2-ethanediyl),α,α',α"-1,2,3-propanetriyltris[w-[[phenyl(2,4,6-trimethylbenzoyl)phosphinyl]oxy]-Polymer) (CAS 1834525-17-5),
und/oder
die Komponente Z-A-5 ausgewählt ist aus der Gruppe bestehend aus Hydrochinon, Hydrochinonmonomethylether, 2,6-Di-tert.-butyl-4-methylphenol, tert.-Butylhydroxyanisol und 2,2,6,6-Tetramethyl-piperidin-1-oxyl,
und/oder
die Komponente Z-B-1 multifunktionelles, oligomeres Urethan(meth)acrylat mit einem Molekulargewicht > 650 g/mol in einer Menge von 25 bis 100 Gew.-%, vorzugsweise 51 bis 100 Gew.-%, bevorzugt 60 bis 90 Gew.-%, besonders bevorzugt 75 bis 90 Gew.-%, und difunktionelles Urethan(meth)acrylat mit einem Molekulargewicht im Bereich von 400 bis 550 g/mol in einer Menge von 0 bis 75 Gew.-%, vorzugsweise 0 bis 49 Gew.-%, bevorzugt 10 bis 40 Gew.-%, besonders bevorzugt 10 bis 25 Gew.-%, jeweils bezogen auf die Gesamtmasse von Z-B-1, umfasst
und/oder
die Komponente Z-B-2 ausgewählt ist aus der Gruppe bestehend aus 2-Hydroxyethyl(meth)acrylat, 2-Hydroxypropyl(meth)acrylat, 3-Hydroxypropyl(meth)-acrylat, Tetrahydrofurfuryl(meth)acrylat, 4-(Meth)acryloylmorpholin, Cyclohexyl-(meth)acrylat, 3,3,5-Trimethylcyclohexyl(meth)acrylat, 4-(1,1-Dimethylethyl)cyclohexyl(meth)acrylat, Isobornyl(meth)acrylat, (Octahydro-4,7-methano-1H-indenyl)-methyl(meth)acrylat, Benzyl(meth)acrylat, 2-Phenoxyethyl(meth)acrylat, 2-Ethoxyethyl(meth)acrylat, 2-(2-Ethoxyethoxy)ethyl(meth)acrylat, 2-[2-(2-Ethoxyethoxy)-ethoxy]ethyl(meth)acrylat, 2-Methoxyethyl(meth)acrylat, 2-(2-Methoxyethoxy)-ethyl(meth)acrylat, 2-[2-(2-Methoxyethoxy)ethoxy]ethyl(meth)acrylat, Hexyl(meth)-acrylat, 2-Ethylhexyl(meth)acrylat, Decyl(meth)acrylat, Isodecyl(meth)acrylat, Dodecyl(meth)acrylat, 2-[[(Butylamino)carbonyl]oxy]ethyl(meth)acrylat, 2-Hydroxy-3-(prop-2-enoyloxy)propyl 2-methyl-2-propylhexanoat, und (5-Ethyl-1,3-dioxan-5-yl)methyl(meth)acrylat,
und/oder
die Komponente Z-B-3 ausgewählt ist aus der Gruppe bestehend aus Ethylenglycoldi(meth)acrylat, Diethylenglycoldi(meth)acrylat, Triethylenglycol-di(meth)acrylat, Tetraethylenglycoldi(meth)acrylat, Polyethylenglycoldi(meth)-acrylat, Propylenglycoldi(meth)acrylat, Dipropylenglycoldi(meth)acrylat, Tri-propylenglycoldi(meth)acrylat, Tetrapropylenglycoldi(meth)acrylat, Polypropylen-glycoldi(meth)acrylat, 1,4-Butandioldi(meth)acrylat, 1,3-Butandioldi(meth)acrylat, 1,6-Hexandioldi(meth)acrylat, 1,10-Decandioldi(meth)acrylat, 1,12-Dodecan-dioldi(meth)acrylat, 2-Hydroxypropyl-1,3-di(meth)acrylat, 3-Hydroxypropyl-1,2-di(meth)acrylat, Neopentylglycoldi(meth)acrylat, Trimethylolpropantri(meth)acrylat, Pentaerythritoldi(meth)acrylat, Pentaerythritoltri(meth)acrylat, Pentaerythritol-tetra(meth)acrylat, 2,2-Bis[4-[3-(meth)acryloyloxy-2-hydroxypropoxy]phenyl]propan, 2,2-Bis[4-(meth)acryloyloxyphenyl]propan, 2,2-Bis[4-(meth)acryloyloxyethoxy-phenyl]propan, 2,2-Bis[4-(meth)acryloyloxydiethoxyphenyl]propan, 2,2-Bis[4-(meth)acryloyloxytriethoxyphenyl]propan 2,2-Bis[4-(meth)acryloyloxytetraethoxy-phenyl]propan, 2,2-Bis[4-(meth)acryloyloxypentaethoxyphenyl]-propan, 2,2-Bis[4-(meth)acryloyloxydipropoxyphenyl]propan, 2,2-Bis[4-(meth)acryloyloxyethoxy-phenyl]-2-[4-(meth)acryloyloxydiethoxyphenyl]propan, 2-[4-(Meth)acryloyloxy-diethoxyphenyl]-2-[4-(meth)-acryloyloxytriethoxyphenyl]propan, 2-[4-(Meth)acryloyl-oxydipropoxyphenyl]-2-[4-(meth)acryloyloxytriethoxyphenyl]propan, 2,2-Bis[4-(meth)acryloyloxyisopropoxyphenyl]propan, ethoxyliertes Bisphenol-A-di-(meth)acrylat, propoxyliertes Bisphenol-A-di(meth)acrylat und 3(4),8(9)-Bis((meth)acryloyloxymethyl)tricyclo[5.2.1.$0^{2,6}$]decan,
und/oder
die Komponente Z-B-4 ausgewählt ist aus der Gruppe bestehend aus alpha-Diketonen, Benzoinalkylethern, Thioxanthonen, Benzophenonen, Acetophenonen, Acylphosphinoxiden, und Acylgermanium-Verbindungen, bevorzugt ausgewählt aus der Gruppe bestehend aus 2,4,6-Trimethylbenzoyldiphenylphosphinoxid, Phenylbis(2,4,6-trimethylbenzoyl)phosphinoxid, Ethyl phenyl(2,4,6-trimethylbenzoyl)-phosphinate (CAS 84434-11-7) und (Poly(oxy-1,2-ethanediyl),$\alpha$,$\alpha$',$\alpha$"-1,2,3-propanetriyltris[w-[[phenyl(2,4,6-trimethylbenzoyl)phosphinyl]oxy]-Polymer) (CAS 1834525-17-5),
und/oder
die Komponente Z-B-5 ausgewählt ist aus der Gruppe bestehend aus Hydrochinon, Hydrochinonmonomethylether, 2,6-Di-*tert*.-butyl-4-methylphenol, *tert*.-Butylhydroxyanisol und 2,2,6,6-Tetramethyl-piperidin-1-oxyl.

**7.** Dentale, duroplastische Schienenanordnung nach einem der vorangehenden Ansprüche, wobei

die Komponente Z-A-1 ein Urethan(meth)acrylat umfasst ausgewählt aus der Gruppe bestehend aus 3,14-Dioxa-4,13-dioxo-5,12-diazahexadecan-1,16-dioxydi(meth)acrylat, 7,7,9-Trimethyl-3,14-dioxa-4,13-dioxo-5,12-diazahexadecan-1,16-dioxydi(meth)acrylat, 7,9,9-Trimethyl-3,14-dioxa-4,13-dioxo-5,12-diazahexa-decan-1,16-dioxydi(meth)acrylat, 1,5,5-Trimethyl-1-[(2-(meth)acryloyloxyethyl)-carbamoylmethyl]-3-(2-(meth)acryloyloxyethyl)carbamoylcyclohexan (CAS 42405-01-6 Methacrylat; CAS 42404-50-2 Acrylat), 1,1'-[Methylenbis(4,1-phenylenimino-carbonyloxy-2,1-ethandiyl)]bis(meth)acrylat (CAS 51243-61-9 Methacrylat; CAS 69790-08-5 Acrylat), 1,1'-[Methylenbis(2,1-phenyleniminocarbonyloxy-2,1-ethandiyl)]bis(meth)acrylat,
und/oder
die Komponente Z-B-1 ein Urethan-Monomer umfasst ausgewählt aus der Gruppe bestehend aus $H_2C=C(R^1)-C(=O)-O-R^2-O-C(=O)-NH-R^3-NH-C(=O)-[O-R^4-O-C(=O)-NH-R^3-NH-C(=O)-]_nO-R^2-O-C(=O)-C(CR^1)=CH_2$ und $[H_2C=C(R^1)C(=O)-O-R^2-O-C(=O)-NH-R^3-NH-C(=O)-O-]_mR^5$, wobei
$R^1$ ein Wasserstoffatom oder eine Methylgruppe ist,
$R^2$ eine geradkettige oder verzweigte C2- bis C4-Alkylengruppe ist,
$R^3$ eine geradkettige, verzweigte und/oder cyclische C2- bis C15-Alkylen-, Arylen-, Arylalkylen- oder Alkylarylengruppe ist,
$R^4$ eine divalente organische Linkergruppe ist,
$R^5$ eine m-valente organische Linkergruppe ist,
n eine ganze Zahl von 0 bis 6 ist und
m eine ganze Zahl von 3 bis 6 ist.

**8.** Dentale, duroplastische Schienenanordnung nach einem der vorangehenden Ansprüche, wobei
die Klebstoffzusammensetzung (Z-C) eine (Meth)acrylat-Zusammensetzung, bevorzugt die erste Zusammensetzung (Z-A) oder die zweite Zusammensetzung (Z-B), ist.

**9.** Dentale, duroplastische Schienenanordnung nach einem der vorangehenden Ansprüche, wobei
die erste Schiene (S-A) ein oder mehrere erste Positionierungsmittel (P-A) aufweist und die zweite Schiene (S-B) ein oder mehrere entsprechende zweite Positionierungsmittel (P-B) aufweist.

**10.** Dentale, duroplastische Schienenanordnung nach einem der vorangehenden Ansprüche, wobei die erste Schiene (S-A) und die zweite Schiene (S-B) getrennt voneinander in generativen Fertigungsverfahren hergestellt werden und anschließend kombiniert werden, bevorzugt durch Verkleben mit der Klebstoffzusammensetzung (Z-C) kombiniert werden.

**11.** Dentale, duroplastische Schienenanordnung nach Anspruch 10, wobei das generative Fertigungsverfahren ein in der ISO/ASTM 52900:2015 unter "VAT Photopolymerization" beschriebenes Verfahren ist, vorzugsweise ausgewählt ist aus der Gruppe bestehend aus Stereolithographie (SLA) und Digital Light Processing (DLP).

**12.** Verfahren zur Herstellung einer dentalen, duroplastischen Schienenanordnung nach einem der vorangehenden Ansprüche, mit den folgenden Schritten

i) Herstellen oder Bereitstellen einer ersten Zusammensetzung (Z-A) umfassend die Bestandteile Z-A-1, Z-A-2, Z-A-3, Z-A-4, Z-A-5, optional Z-A-6 und optional Z-A-7,
ii) Bereitstellen eines ersten Datensatzes (D-A),
iii) Herstellen einer ersten Schiene (S-A) in einer Form entsprechend des ersten Datensatzes (D-A) durch Polymerisation der ersten Zusammensetzung (Z-A),
iv) Herstellen oder Bereitstellen einer zweiten Zusammensetzung (Z-B) umfassend die Bestandteile Z-B-1, Z-B-2, Z-B-3, Z-B-4, Z-B-5, optional Z-B-6 und optional Z-B-7,
v) Bereitstellen eines zweiten Datensatzes (D-B),
vi) Herstellen einer zweiten Schiene (S-B) in einer Form entsprechend des zweiten Datensatzes (D-B) durch Polymerisation der zweiten Zusammensetzung (Z-B), und
vii) Kombinieren der ersten Schiene (S-A) und der zweiten Schiene (S-B) zu einer Schienenanordnung, bevorzugt durch Verkleben der ersten Schiene (S-A) und der zweiten Schiene (S-B) mit einer Klebstoffzusammensetzung (Z-C).

**13.** Verfahren nach Anspruch 12 zur Herstellung einer dentalen, duroplastischen Schienenanordnung wobei

der erste Datensatz (D-A) einen ersten Teildatensatz (D-A-IS) umfasst, der der Innenseite (S-A-IS) der ersten Schiene (S-A) entspricht, und einen zweiten Teildatensatz (D-A-AS) umfasst, der der Außenseite (S-A-AS) der ersten Schiene (S-A) entspricht, und
der zweite Datensatz (D-B) einen dritten Teildatensatz (D-B-IS) umfasst, der der Innenseite (S-B-IS) der zweiten Schiene (S-B) entspricht, und einen vierten Teildatensatz (D-B-AS) umfasst, der der Außenseite (S-B-AS) der zweiten Schiene (S-B) entspricht, und
wobei der dritte Teildatensatz (D-B-IS) der äußeren Form Zahnbogens entspricht.

**14.** Verfahren nach einem der Ansprüche 12 bis 13 zur Herstellung einer dentalen, duroplastischen Schienenanordnung wobei

der vierte Teildatensatz (D-B-AS) durch Addition einer Wandstärke (W-B) im Bereich von 0,2 bis 2 mm zum dritten Teildatensatz (D-B-IS) generiert wird und der erste Teildatensatz (D-A-IS) dem vierten Teildatensatz (D-B-AS) entspricht und der zweite Teildatensatz (D-A-AS) durch Addition einer Wandstärke (W-A) im Bereich von 0,2 bis 2 mm zum ersten Teildatensatz (D-A-IS) generiert wird
oder
der vierte Teildatensatz (D-B-AS) durch Addition einer Wandstärke (W-B) im Bereich von 0,2 bis 2 mm zum dritten Teildatensatz (D-B-IS) generiert wird und der zweite Teildatensatz (D-A-AS) durch Addition einer Gesamtwandstärke (W-AB) im Bereich von 0,5 bis 4 mm zum dritten Teildatensatz (D-B-IS) generiert wird und der vierte Teildatensatz (D-B-AS) dem ersten Teildatensatz (D-A-IS) entspricht
oder
der zweite Teildatensatz (D-A-AS) durch Addition einer Gesamtwandstärke (W-AB) im Bereich von 0,5 bis 4 mm zum dritten Teildatensatz (D-B-IS) generiert wird und der erste Teildatensatz (D-A-IS) durch Subtraktion einer Wandstärke (W-A) im Bereich von 0,2 bis 2 mm vom zweiten Teildatensatz (D-A-AS) generiert wird und der vierte Teildatensatz (D-B-AS) dem ersten Teildatensatz (D-A-IS) entspricht oder
der vierte Teildatensatz (D-B-AS) durch Ausblocken in einer Wandstärke (W-B) im Bereich von 0,2 bis 2 mm generiert wird und der erste Teildatensatz (D-A-IS) dem vierten Teildatensatz (D-B-AS) entspricht und der zweite Teildatensatz (D-A-AS) durch Modellierung in einer Wandstärke (W-A) im Bereich von 0,2 bis 2 mm generiert wird.

**15.** Verwendung einer dentalen, duroplastischen Schienenanordnung, nach einem der Ansprüche 1 bis 11, zur Behandlung von Zahnfehlstellungen, Knirschen, Bruxismus oder Schlafapnoe-Syndrom.

Europäisches Patentamt
European Patent Office
Office européen des brevets

# EUROPÄISCHER RECHERCHENBERICHT

Nummer der Anmeldung
EP 24 17 4279

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br><br>Y | EP 3 536 276 A1 (ALIGN TECHNOLOGY INC [US]) 11. September 2019 (2019-09-11)<br>* Anspruch 1 *<br>* Absätze [0042], [0043], [0082], [0085], [0096], [0178] *<br>----- | 1-3, 9-11,15<br>4-8, 12-14 | INV.<br>B33Y70/00<br>A61C7/08<br>C08F222/10<br>B33Y80/00 |
| Y,D | EP 3 669 853 A1 (IVOCLAR VIVADENT AG [LI]) 24. Juni 2020 (2020-06-24)<br>* Absätze [0001], [0080] - [0082], [0090], [0095] *<br>* Beispiele 11-14; Tabelle 2 *<br>* Ansprüche 1-21 *<br>----- | 4-8, 12-14 | |
| | | | RECHERCHIERTE SACHGEBIETE (IPC) |
| | | | A61C<br>B33Y<br>C08F |

Der vorliegende Recherchenbericht wurde für alle Patentansprüche erstellt

1

| Recherchenort | Abschlußdatum der Recherche | Prüfer |
|---|---|---|
| Den Haag | 26. September 2024 | Fernandez Recio, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 17 4279

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-09-2024

| Im Recherchenbericht angeführtes Patentdokument | Datum der Veröffentlichung | Mitglied(er) der Patentfamilie | Datum der Veröffentlichung |
|---|---|---|---|
| EP 3536276 A1 | 11-09-2019 | AU 2006220803 A1 | 14-09-2006 |
| | | CA 2609151 A1 | 14-09-2006 |
| | | EP 1871274 A2 | 02-01-2008 |
| | | EP 2932935 A1 | 21-10-2015 |
| | | EP 3536276 A1 | 11-09-2019 |
| | | JP 2008531234 A | 14-08-2008 |
| | | WO 2006096558 A2 | 14-09-2006 |
| EP 3669853 A1 | 24-06-2020 | CN 111349196 A | 30-06-2020 |
| | | EP 3669853 A1 | 24-06-2020 |
| | | ES 2913237 T3 | 01-06-2022 |
| | | US 2020199346 A1 | 25-06-2020 |
| | | US 2023357556 A1 | 09-11-2023 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3768164 A
- US 4798534 A
- US 5692894 A
- US 20050100853 A1
- WO 2022090940 A1
- US 5103838 A
- US 20010051256 A1
- US 20090298006 A1
- US 20130302742 A1
- US 20160228215 A1
- US 20200237478 A1
- US 20200237480 A1
- US 20200290262 A1
- US 20210077225 A1
- US 20210137642 A1
- US 20210137643 A1
- EP 3536276 A1
- US 20200199268 A1
- US 20200199346 A1
- US 20220041777 A1


### In der Beschreibung aufgeführte Nicht-Patentliteratur


- *CHEMICAL ABSTRACTS,* 84434-11-7
- *CHEMICAL ABSTRACTS,* 1834525-17-5
- *CHEMICAL ABSTRACTS,* 42405-01-6
- *CHEMICAL ABSTRACTS,* 42404-50-2
- *CHEMICAL ABSTRACTS,* 51243-61-9
- *CHEMICAL ABSTRACTS,* 69790-08-5
- *CHEMICAL ABSTRACTS,* 103597-45-1
- *CHEMICAL ABSTRACTS,* 131-55-5
- *CHEMICAL ABSTRACTS,* 3896-11-5
- *CHEMICAL ABSTRACTS,* 18600-59-4
- *CHEMICAL ABSTRACTS,* 2725-22-6
- *CHEMICAL ABSTRACTS,* 2440-22-4
- *CHEMICAL ABSTRACTS,* 23328-53-2
- *CHEMICAL ABSTRACTS,* 3864-99-1
- *CHEMICAL ABSTRACTS,* 131-53-3
- *CHEMICAL ABSTRACTS,* 131-54-4
- *CHEMICAL ABSTRACTS,* 13373-29-0
- *CHEMICAL ABSTRACTS,* 41556-26-7
- *CHEMICAL ABSTRACTS,* 82919-37-7
- *CHEMICAL ABSTRACTS,* 129757-67-1
- *CHEMICAL ABSTRACTS,* 63843-89-0
- *CHEMICAL ABSTRACTS,* 32052-51-0
- *CHEMICAL ABSTRACTS,* 4098-71-9
- *CHEMICAL ABSTRACTS,* 77-58-7
- *CHEMICAL ABSTRACTS,* 128-37-0
- *CHEMICAL ABSTRACTS,* 72869-86-4
- *CHEMICAL ABSTRACTS,* 5888-33-5
- *CHEMICAL ABSTRACTS,* 27813-02-1
- *CHEMICAL ABSTRACTS,* 109-16-0
- *CHEMICAL ABSTRACTS,* 43048-08-4
- *CHEMICAL ABSTRACTS,* 75980-60-8